(19) Europäisches Patentamt
European Patent Office
Office européen des brevets

(11) **EP 3 357 650 A2**

(12) **EUROPEAN PATENT APPLICATION**

(43) Date of publication:
**08.08.2018 Bulletin 2018/32**

(51) Int Cl.:
***B25J 9/16*** *(2006.01)*

(21) Application number: **18155078.1**

(22) Date of filing: **05.02.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **06.02.2017 JP 2017019312**

(71) Applicant: **Seiko Epson Corporation**
**Tokyo 160-8801 (JP)**

(72) Inventors:
• **MIZOBE, Kimitake**
**Nagano, 392-8502 (JP)**
• **HASEGAWA, Hiroshi**
**Nagano, 392-8502 (JP)**
• **TANAKA, Taro**
**Nagano, 392-8502 (JP)**
• **FU, Guoyi**
**Markham, ON, L3R 6G3 (CA)**
• **LAPPA, Iouri**
**Markham, ON, L3R 6G3 (JP)**
• **LI, Alan stephen**
**Markham, ON, L3R 6G3 (JP)**

(74) Representative: **Hoffmann Eitle**
**Patent- und Rechtsanwälte PartmbB**
**Arabellastraße 30**
**81925 München (DE)**

(54) **CONTROL DEVICE, ROBOT, AND ROBOT SYSTEM**

(57) A control device includes a calculation unit that calculates an optical parameter related to an optical system imaging a target object, by using machine learning, a detection unit that detects the target object on the basis of an imaging result in the optical system by using the calculated optical parameter, and a control unit that controls a robot on the basis of a detection result of the target object.

FIG. 6

**Description**

BACKGROUND

1. Technical Field

The present invention relates to a control device, a robot, and a robot system.

2. Related Art

Various settings are necessary in order to cause a robot to perform work, and, in the related art, various settings are artificially performed.
In the related art, there is a technique using machine learning in order to optimize a frequency of tool correction in a machine tool (Japanese Patent No. 5969676).
High-grade know-how is necessary in order to perform the various settings in a robot, and a difficulty level is high.

SUMMARY

A control device according to an aspect of the invention includes a calculation unit that calculates an optical parameter related to an optical system imaging a target object, by using machine learning; a detection unit that detects the target object on the basis of an imaging result in the optical system by using the calculated optical parameter; and a control unit that controls a robot on the basis of a detection result of the target object. According to the configuration, it is possible to calculate, with a high probability, an optical parameter for detecting a target obj ect with higher accuracy than an optical parameter which is artificially determined.
The detection unit may detect a positional attitude of the target object. According to the configuration, it is possible to detect a positional attitude of a target object with high accuracy.
The optical system may include an imaging unit, and the optical parameter may include an imaging unit parameter related to the imaging unit. According to the configuration, the imaging unit can be adjusted such that the detection accuracy of a target object is increased.
The optical parameter may include an image processing parameter related to image processing on an image of the target object captured by the imaging unit. According to the configuration, it is possible to perform image processing increasing the detection accuracy of a target object.
The optical system may include an illumination unit, and the optical parameter may include an illumination unit parameter related to the illumination unit. According to the configuration, the illumination unit can be adjusted such that the detection accuracy of a target object is increased.
The calculation unit may include a state observation portion that observes at least an image captured by using the optical system at the optical parameter as a state variable; and a learning portion that learns the optical parameter on the basis of the image as the state variable. According to the configuration, it is possible to easily calculate an optical parameter for detecting a target object with high accuracy.
The learning portion may determine a behavior changing the optical parameter on the basis of the image as the state variable, and optimize the optical parameter. According to the configuration, an optical parameter can be optimized so as to correspond to a use environment of the robot.
The learning portion may evaluate a reward for the behavior on the basis of whether or not a detection result of the target object is good or bad. According to the configuration, it is possible to perform optimization such that the detection accuracy of a target object is increased.
The learning portion may evaluate a reward for the behavior on the basis of whether or not work performed by the robot is good or bad by using a detection result of the target object. According to the configuration, it is possible to optimize a parameter such that the quality of the robot is increased.
The calculation unit may optimize the optical parameter by repeatedly performing observation of the state variable, determination of the behavior corresponding to the state variable, and evaluation of the reward obtained through the behavior. According to the configuration, it is possible to automatically optimize an optical parameter.
The calculation unit may calculate an operation parameter related to an operation of the robot, and the control unit may control the robot on the basis of the operation parameter. According to the configuration, it is possible to improve operation performance of the robot along with the detection accuracy of a target object.
The calculation unit may calculate the optical parameter and the operation parameter on the basis of an image obtained by the optical system imaging the target object which is a work target of the robot. According to the configuration, it is possible to operate the robot such that the detection accuracy of a target object is increased.

## BRIEF DESCRIPTION OF THE DRAWINGS

The invention will be described with reference to the accompanying drawings, wherein like numbers reference like elements.

Fig. 1 is a perspective view of a robot system.
Fig. 2 is a functional block diagram of a control device.
Fig. 3 is a diagram illustrating parameters.
Fig. 4 is a diagram illustrating acceleration and deceleration characteristics.
Fig. 5 is a flowchart illustrating a pickup process.
Fig. 6 is a block diagram illustrating a configuration related to a calculation unit.
Fig. 7 is a diagram illustrating an example of learning optical parameters.
Fig. 8 is a diagram illustrating an example of a multiplayer neural network.
Fig. 9 is a flowchart illustrating a learning process.
Fig. 10 is a diagram illustrating an example of learning operation parameters.
Fig. 11 is a diagram illustrating an example of learning force control parameters.

## DESCRIPTION OF EXEMPLARY EMBODIMENTS

Hereinafter, an embodiment of the invention will be described in the following order with reference to the accompanying drawings. The same reference numerals are added to corresponding constituent elements throughout the drawings, a repeated description will be omitted.

(1) Configuration of robot system
(2) Control of robot
(3) Pickup process
(4) Learning process
(4-1) Learning of optical parameters
(4-2) Learning example of optical parameters
(4-3) Learning of operation parameters
(4-4) Learning example of operation parameters
(4-5) Learning of force control parameters
(4-6) Learning example of force control parameters
(5) Other embodiments

(1) Configuration of robot system

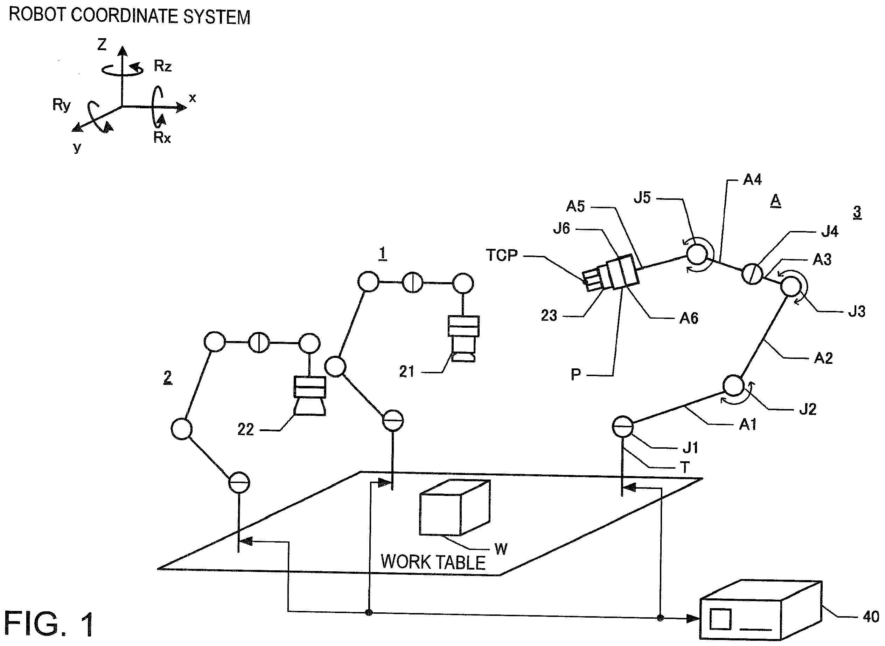

Fig. 1 is a perspective view illustrating a robot controlled by a control device according to an embodiment of the invention. A robot system as one Example of the invention includes robots 1 to 3 as illustrated in Fig. 1. Each of the robots 1 to 3 is a six-axis robot including an end effector, and the different end effectors are attached to the robots 1 to 3. In other words, the robot 1 is attached with an imaging unit 21, the robot 2 is attached with an illumination unit 22, and the robot 3 is attached with a gripper 23. Herein, the imaging unit 21 and the illumination unit 22 are referred to as an optical system.

The robots 1 to 3 are controlled by a control device 40. The control device 40 is communicably connected to the robots 1 to 3 via cables. A constituent element of the control device 40 may be provided in the robot 1. The control device 40 may be formed of a plurality of devices (for example, a learning unit and a control unit are provided in different devices) . The control device 40 can be communicably connected to a teaching device (not illustrated) via a cable or wireless communication. The teaching device may be a dedicated computer, and may be a general purpose computer in which a program for teaching the robot 1 is installed. The control device 40 and the teaching device may be integrally formed with each other.

The robots 1 to 3 are single-arm robots of which various end effectors are attached to arms, and, in the present embodiment, configurations of the arms or axes of the robots 1 to 3 are equivalent to each other. In Fig. 1, reference signs for explaining arms or axes are added to the robot 3. As illustrated in the robot 3, each of the robots 1 to 3 includes a base T, six arm members A1 to A6, and six joints J1 to J6. The base T is fixed to a work table. The base T and the six arm members A1 to A6 are connected to each other via the joints J1 to J6. The arm members A1 to A6 and the end effectors are movable portions, and the movable portions are operated such that the robots 1 to 3 can perform various pieces of work.

In the present embodiment, the joints J2, J3 and J5 are bent joints, and the joints J1, J4 and J6 are torsional joints. The arm member A6 on the distal end side in the arm A is attached with a force sensor P and the end effector. Each of the robots 1 to 3 drives the arms of six axes such that the end effector is disposed at any position within a movable range, and can thus take any attitude (angle).

The end effector provided in the robot 3 is the gripper 23, and can grip a target object W. The end effector provided in the robot 2 is the illumination unit 22, and can illuminate an irradiation region with light. The end effector provided in the robot 1 is the imaging unit 21, and can capture an image within a visual field. In the present embodiment, a position which is relatively fixed with respect to the end effector of each of the robots 1 to 3 is defined as a tool center point (TCP). A position of the TCP is a reference position of the end effector, and a TCP coordinate system which has the TCP as the origin and is a three-dimensional orthogonal coordinate system relatively fixed with respect to the end effector is defined.

The force sensor P is a six-axis force detector. The force sensor P detects magnitudes of forces which are parallel to three detection axes orthogonal to each other, and magnitudes of torques about the three detection axes, in a sensor coordinate system which is a three-dimensional orthogonal coordinate system having a point on the force sensor as the origin. In the present embodiment, the six-axis robot is exemplified, but various aspects of robots may be used, and aspects of the robots 1 to 3 may be different from each other. Any one or more of the joints J1 to J5 other than the joint J6 may be provided with a force sensor as a force detector.

If a coordinate system for defining a space where the robots 1 to 3 are provided is referred to as a robot coordinate system, the robot coordinate system is a three-dimensional orthogonal coordinate system defined by an x axis and a y axis orthogonal to each other on a horizontal plane, and a z axis having a vertical upward as a positive direction (refer to Fig. 1). A negative direction of the z axis substantially matches the gravitational direction. A rotation angle about the x axis is indicated by Rx, a rotation angle about the y axis is indicated by Ry, and a rotation angle about the z axis is indicated by Rz. Any position in the three-dimensional space can be expressed by positions in the x, y and z directions, and any attitude in the three-dimensional space can be expressed by rotation angles in the Rx, Ry and Rz directions. Hereinafter, it is assumed that a position may also indicate an attitude. It is assumed that force may also indicate torque.

In the present embodiment, force control of controlling a force acting on the robot can be performed, and the force control is performed such that an acting force acting on any point becomes a target force. Forces applied to various parts are defined in a force control coordinate system which is a three-dimensional orthogonal coordinate system. The target force (including a torque) may be expressed by a vector having an acting point of force expressed in the force control coordinate system as a starting point, and a starting point of the target force vector is the origin of the force control coordinate system, and a direction of the acting force matches one axis direction of the force control coordinate system, before learning which will be described later is performed. However, in a case where the learning which will be described later is performed, a starting point of the target force vector may be different from the origin of the force control coordinate system, and a direction of the target force vector may be different from the axis direction of the force control coordinate system.

In the present embodiment, relationships among various coordinate systems are defined in advance, and coordinate values in the various coordinate systems can be converted into each other. In other words, positions or vectors in the TCP coordinate system, the sensor coordinate system, the robot coordinate system, and the force control coordinate system can be converted into each other. Herein, for simplification, a description will be made of a case where the control device 40 controls a position of the TCP and an acting force acting on the TCP in the robot coordinate system, but positions of the robots 1 to 3 or forces acting on the robots 1 to 3 can be defined in various coordinate systems and converted into each other, and thus a position or a force may be defined in any coordinate system and be controlled. Of course, coordinate systems (for example, an object coordinate system fixed to a target object) other than the coordinate systems described here may be defined, and conversion may be performed.

(2) Control of robot

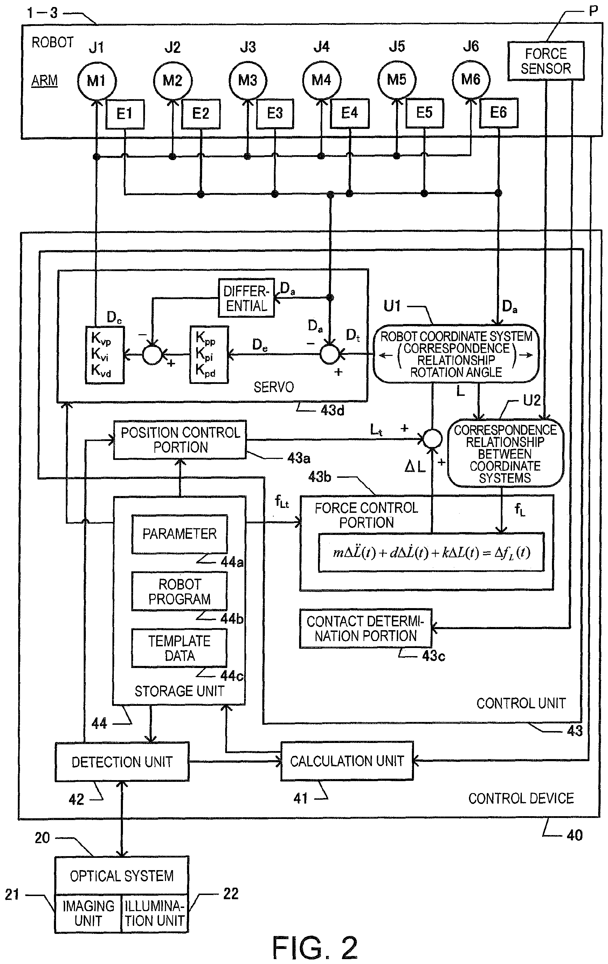

The robot 1 is a general purpose robot which can perform various pieces of work through teaching, and includes, as illustrated in Fig. 2, motors M1 to M6 as actuators, and encoders E1 to E6 as sensors. Controlling the arms indicates controlling the motors M1 to M6. The motors M1 to M6 and the encoders E1 to E6 are provided to respectively correspond to the joints J1 to J6, and the encoders E1 to E6 respectively detect rotation angles of the motors M1 to M6. The respective motors M1 to M6 are connected to power lines for supplying power, and each of the power lines is provided with an ammeter. Therefore, the control device 40 can measure a current supplied to each of the motors M1 to M6.

The control device 40 includes hardware resources such as a computer and various software resources stored in a storage unit 44, and can execute a program. In the present embodiment, the control device 40 functions as a calculation unit 41, a detection unit 42, and a control unit 43. The hardware resources may include a CPU, a RAM, a ROM, and the like, and may include an ASIC, and various configurations may be employed.

In the present embodiment, the detection unit 42 performs a process of detecting a target object, and the control unit 43 drives the arms of the robots 1 to 3. The detection unit 42 is connected to the imaging unit 21 and the illumination unit 22 forming an optical system 20. The detection unit 42 controls the imaging unit 21, and acquires an image captured by an imaging sensor provided in the imaging unit 21. The detection unit 42 controls the illumination unit 22, and changes brightness of output light.

If an image is output from the imaging unit 21, the detection unit 42 performs a template matching process on the basis of the captured image, and performs a process of detecting a position (positional attitude) of a target object. In other words, the detection unit 42 performs the template matching process on the basis of template data 44c stored in the storage unit 44. The template data 44c is a template for each of a plurality of positional attitudes. Therefore, if a positional attitude is correlated with an ID or the like with respect to the template data 44c, a positional attitude of a target object viewed from the detection unit 42 can be specified by using the appropriate type of template data 44c.

Specifically, the detection unit 42 sequentially sets the template data 44c for each of a plurality of positional attitudes as a processing target, and compares the template data 44c with the captured image while changing a size of the template data 44c. The detection unit 42 detects, as an image of the target object, an image in which a difference between the template data 44c and the image is equal to or less than a threshold value.

If the image of the target object is detected, the detection unit 42 specifies a positional attitude of the target object on the basis of a size of the template data 44c appropriate for a relationship of a predefined coordinate system and. In other words, a distance between the imaging unit 21 and the target object in an optical axis direction is determined on the basis of the size of the template data 44c, and a position of the target object in a direction perpendicular to the optical axis is determined on the basis of the position of the target object detected in the image.

Therefore, for example, in a case where the optical axis of the imaging sensor of the imaging unit 21 and two axes of an imaging plane are respectively defined to be parallel to the axes of the TCP coordinate system, the detection unit 42 can specify a position of the target object in the TCP coordinate system on the basis of a size of the template data 44c, and a position where the template data 44c is appropriate for the image. The detection unit 42 may specify an attitude of the target object in the TCP coordinate system on the basis of an ID of the appropriate template data 44c. Thus, the detection unit 42 can specify a positional attitude of the target object in any coordinate system, for example, the robot coordinate system by using the correspondence relationship in the above coordinate system.

The template matching process may be a process for specifying a positional attitude of a target object, and may employ various processes. For example, a difference between the template data 44c and an image may be evaluated on the basis of a difference between grayscale values, and may be evaluated on the basis of a difference between features of the image (for example, gradients of the image).

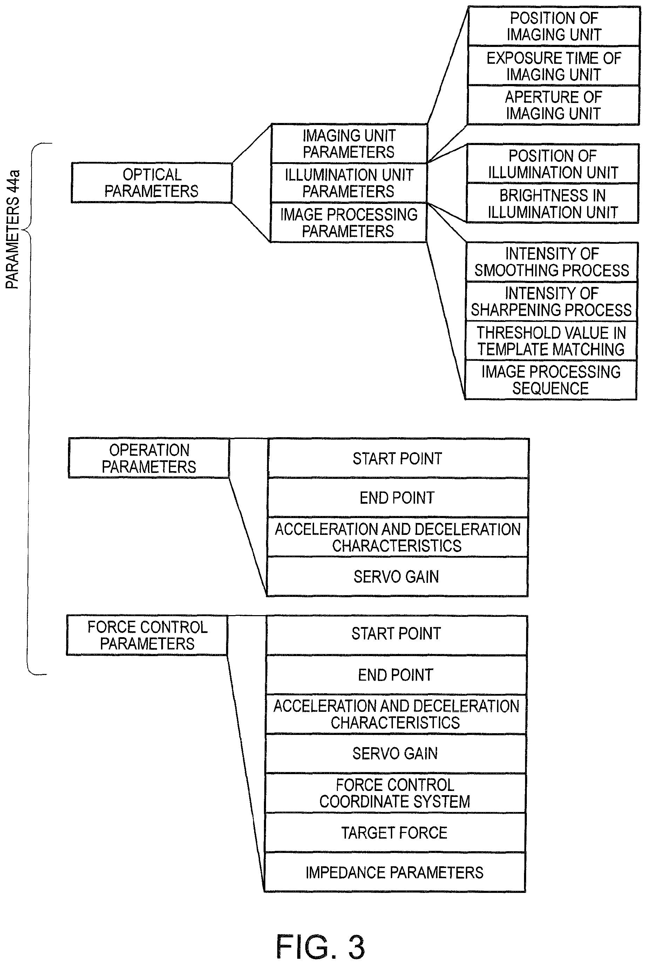

The detection unit 42 performs the template matching process by referring to parameters. In other words, various parameters 44a are stored in the storage unit 44, and the parameters 44a include parameters related to detection in the detection unit 42. Fig. 3 is a diagram illustrating examples of the parameters 44a. In the examples illustrated in Fig. 3, the parameters 44a include optical parameters, operation parameters, and force control parameters.

The optical parameters are parameters related to detection in the detection unit 42. The operation parameters and the force control parameters are parameters related to control of the robots 1 to 3, and details thereof will be described later. The optical parameters include an imaging unit parameter related to the imaging unit 21, an illumination unit parameter related to the illumination unit 22, and an image processing parameter related to image processing on an image of a target object captured by the imaging unit 21.

Fig. 3 illustrates examples of such parameters. In other words, a position at which the imaging unit 21 is disposed to image a target object is defined as a position of the imaging unit, and is included in the imaging unit parameter. The imaging unit 21 includes a mechanism capable of adjusting an exposure time and an aperture, and an exposure time and a value of the aperture for imaging a target object are included in the imaging unit parameter. A position of the imaging unit may be described in various methods, and, for example, a configuration in which a position of the TCP of the imaging unit 21 is described in the robot coordinate system may be employed.

The detection unit 42 delivers a position of the imaging unit 21 to a position control portion 43a which will be described later by referring to the imaging unit parameter. As a result, the position control portion 43a generates a target position Lt, and controls the robot 1 on the basis of the target position Lt. The detection unit 42 sets an exposure time and an aperture of the imaging unit 21 by referring to the imaging unit parameter. As a result, the imaging unit 21 is brought into a state of performing imaging on the basis of the exposure time and the aperture.

A position at which the illumination unit 22 is disposed when a target object is imaged is defined as a position of the illumination unit, and is included in the illumination unit parameter. The illumination unit 22 includes a mechanism capable of adjusting brightness, and a value of brightness of when a target object is imaged is included in the illumination unit parameter. A position of the illumination unit may also be described in various methods, and, for example, a configuration in which a position of the TCP of the illumination unit 22 is described in the robot coordinate system may be employed.

The detection unit 42 delivers a position of the illumination unit 22 to the position control portion 43a which will be described later by referring to the imaging unit parameter. As a result, the position control portion 43a generates a target position Lt, and controls the robot 2 on the basis of the target position Lt. The detection unit 42 sets brightness in the illumination unit 22 by referring to the illumination unit parameter. As a result, the illumination unit 22 is brought into a state of outputting light with the brightness.

The detection unit 42 refers to the image processing parameter in a case where the template matching process is applied to an image captured by the imaging unit 21. In other words, the image processing parameter includes an image processing order indicating a processing sequence of performing the template matching process. In the present embodiment, a threshold value in the template matching process is variable, and a threshold value of the current template matching is included in the image processing parameter. The detection unit 42 may perform various processes before comparing the template data 44c with an image. In Fig. 3, a smoothing process and a sharpening process are exemplified as the various processes, and the intensity of each thereof is included in the image processing parameter.

If an image is output from the imaging unit 21, the detection unit 42 determines an order of image processing (including whether or not the image processing is to be performed) on the basis of the image processing sequence, and performs image processing such as a smoothing process or a sharpening process in the order. In this case, the detection unit 42 performs image processing such as the smoothing process or the sharpening process according to the intensity described in the image processing parameter. In a case where comparison (comparison between the template data 44c and the image) included in the image processing sequence is performed, the comparison is performed on the basis of a threshold value indicated by the image processing parameter.

As described above, the detection unit 42 may operate the robot 1 or 2 by specifying a position of the imaging unit 21 or the illumination unit 22 on the basis of the optical parameters, but positions of when the robot 1 and the robot 2 are driven may be given by the operation parameters or the force control parameters which will be described later.

In the present embodiment, the control unit 43 includes the position control portion 43a, a force control portion 43b, a contact determination portion 43c, and a servo 43d. In the control unit 43, a correspondence relationship U1 between a combination of rotation angles of the motors M1 to M6 and a position of the TCP in the robot coordinate system is stored in a storage medium (not illustrated), and a correspondence relationship U2 between the coordinate systems is stored in a storage medium (not illustrated). Therefore, the control unit 43 or the calculation unit 41 which will be described later can convert a vector in any coordinate system into a vector in another coordinate system on the basis of the correspondence relationship U2. For example, the control unit 43 or the calculation unit 41 may acquire acting forces to the robots 1 to 3 in the sensor coordinate system on the basis of outputs from the force sensor P, and may convert the acting forces into forces acting on positions of the TCP in the robot coordinate system. The control unit 43 or the calculation unit 41 may convert a target force expressed in the force control coordinate system into a target force at a position of the TCP in the robot coordinate system. Of course, the correspondence relationships U1 and U2 may be stored in the storage unit 44.

The control unit 43 controls positions of various parts moving along with the robots 1 to 3 or forces acting on the various parts by driving the arms, and position control is mainly performed by the position control portion 43a, and force control is mainly performed by the force control portion 43b. The servo 43d performs servo control, and performs feedback control such that a rotation angle Da of each of the motors M1 to M6 indicated by each of outputs from the encoders E1 to E6 match a target angle Dt which are control targets. In other words, the servo 43d may perform PID control in which servo gains Kpp, Kpi and Kpd are respectively applied to a deviation between the rotation angle Da and the target angle Dt, an integral of the deviation, and a differential of the deviation.

The servo 43d may perform PID control in which servo gains Kvp, Kvi and Kvd are respectively applied to a deviation between each of outputs obtained by applying the servo gains Kpp, Kpi and Kpd and the differential of the rotation angle Da, an integral of the deviation, and a differential of the deviation. The control performed by the servo 43d may be performed on each of the motors M1 to M6. Therefore, each servo gain may be applied to each of the six axes of the robots 1 to 3. In the present embodiment, the control unit 43 may output a control signal to the servo 43d so as to change the servo gains Kpp, Kpi, Kpd, Kvp, Kvi and Kvd.

The storage unit 44 stores a robot program 44b for controlling the robots 1 to 3 in addition to the parameters 44a. In the present embodiment, the parameters 44a and the robot program 44b are generated through teaching and are stored in the storage unit 44, but may be corrected by the calculation unit 41 which will be described later. The robot program 44b mainly indicates the sequence of work (an order of steps) performed by the robots 1 to 3, and is described by a combination of predefined commands. The parameters 44a are specific values which are required to realize each step, and are described as arguments of each command.

The parameters 44a for controlling the robots 1 to 3 include the operation parameters and the force control parameters in addition to the optical parameters. The operation parameters are parameters related to operations of the robots 1 to 3, and are parameters which are referred to during position control in the present embodiment. In other words, in the present embodiment, a series of work may be divided into a plurality of steps, and the parameters 44a of when each step is performed are generated through teaching. The operation parameters include parameters indicating a start point and an end point in the plurality of steps. The start point and the end point may be defined in various coordinate systems, and, in the present embodiment, the start point and the end point of the TCP of a control target robot are defined in the robot coordinate system. In other words, a translation position and a rotation position are defined for each axis of the robot coordinate system.

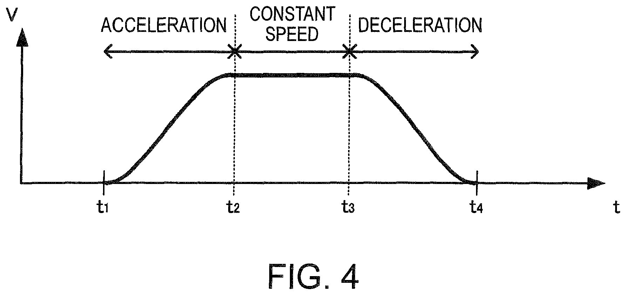

The operation parameters include acceleration and deceleration characteristics of the TCP in a plurality of steps . The acceleration and deceleration characteristics indicate a period in which the TCP of each of the robots 1 to 3 is moved from a start point to an end point in each step, and a velocity of the TCP at each time point in the period. Fig. 4 is a diagram illustrating examples of the acceleration and deceleration characteristics, and a speed V of the TCP at each time point in a period from a movement starting time point t1 of the TCP at a start point to a time point t4 at which the TCP reaches an end point is defined. In the present embodiment, the acceleration and deceleration characteristics include a constant speed period.

The constant speed period is a period from a time point t2 to a time point t3, and a speed is constant in this period. The TCP accelerates and decelerates before and after the period. In other words, the TCP accelerates in a period from the time point t1 to the time point t2, and the TCP decelerates in a period from the time point t3 to the time point t4. The acceleration and deceleration characteristics may be defined in various coordinate systems, and is, in the present embodiment, a speed of the TCP of a control target robot, and is defined in the robot coordinate system. In other words, a translation speed and a rotation speed (angular velocity) for each axis of the robot coordinate system are defined.

The operation parameters include the servo gains Kpp, Kpi, Kpd, Kvp, Kvi and Kvd. In other words, the control unit 43 may adjust the servo gains Kpp, Kpi, Kpd, Kvp, Kvi and Kvd by outputting a control signal to the servo 43d such that values described as the operation parameters are obtained. In the present embodiment, the servo gains are values for each step, but may be values for a shorter period through learning which will be described later.

The force control parameters are parameters related to force control of the robots 1 to 3, and is a parameter referred to during force control in the present embodiment. The start point, the end point, the acceleration and deceleration characteristics, and the servo gains are the same parameters as those in the operation parameters, and the start point, the end point, and the acceleration and deceleration characteristics are defined for translation and rotation on the three axes of the robot coordinate system. The servo gains are defined for each of the motors M1 to M6. However, in a case of force control, at least a part of the start point and the end point may not be defined (any value may be employed). For example, in a case where collision avoidance or profiling control is performed such that a force acting in any direction is 0, a state may be defined in which a start point and an end point in the direction are not defined, and a position can be changed at random such that a force in the direction becomes 0.

The force control parameters include information indicating the force control coordinate system. The force control coordinate system is a coordinate system for defining a target force of force control, a starting point of a target force vector is the origin, and one axis is directed toward a direction of the target force vector, before learning which will be described later is performed. In other words, in a case where various target forces in force control are defined through teaching, an acting point of a target force in each step of each piece of work is taught. For example, in a case where one point of a target object is brought into contact with another object, and a direction of the target object is changed in a state in which a predetermined target force is caused to act on another object from the target object at the contact point between both of the objects, the point where the target object is brought into contact with another object is an acting point, and the force control coordinate system having the acting point as the origin is defined. Therefore, in the force control parameters, information for specifying a coordinate system which has a point on which a target force of force control acts as the origin and in which one axis is directed toward a direction of the target force, that is, the force control coordinate system, is included in a parameter. The parameter may be variously defined, but may be defined by, for example, data indicating a relationship between the force control coordinate system and another coordinate system (the robot coordinate system or the like).

The force control parameters include a target force. The target force is a force taught as a force required to act on any point in various types of work, and is defined in the force control coordinate system. In other words, a target force vector indicating the target force is defined by a starting point of the target force vector and six-axis components (translation forces on three axes and torques on three axes) from the starting point, and is expressed in the force control coordinate system. If a relationship between the force control coordinate system and another coordinate system is used, the target force may be converted into a vector in any coordinate system, for example, the robot coordinate system.

The force control parameters include impedance parameters. In other words, in the present embodiment, force control performed by the force control portion 43b is impedance control. The impedance control is control in which virtual mechanical impedance is realized by the motors M1 to M6. In this case, virtual mass of the TCP is defined as a virtual inertial coefficient m, viscous resistance virtually applied to the TCP is defined as a virtual viscosity coefficient d, and a spring constant of elastic force virtually applied to the TCP is defined as a virtual elasticity coefficient k. The impedance parameters are such m, d, and k, and are defined for translation and rotation on each axis of the robot coordinate system. In the present embodiment, the force control coordinate system, the target force, and the impedance parameters are values for each step, but may be values for a shorter period through learning which will be described later.

In the present embodiment, a series of work is divided into a plurality of steps, and the robot program 44b for performing each step is generated through teaching, but the position control portion 43a subdivides each step indicated by the robot program 44b into minute steps for each minute time ΔT. The position control portion 43a generates a target position Lt in each minute step on the basis of the parameters 44a. The force control portion 43b acquires a target force fLt in each step of a series of work on the basis of the parameters 44a.

In other words, the position control portion 43a refers to a start point, and end point, and acceleration and deceleration characteristics indicated by the operation parameters or the force control parameters, and generates a position of the TCP in each minute step in a case where the TCP is moved according to the acceleration and deceleration characteristics from the start point to the end point (in a case where an attitude is changed in terms of the attitude), as the target position Lt. The force control portion 43b refers to a target force indicated by force control parameters in each steps, and converts the target force into the target force fLt in the robot coordinate system on the basis of the correspondence relationship U2 between the force control coordinate system and the robot coordinate system. The target force fLt may be converted into a force acting on any point, but, herein, since an acting force which will be described later is expressed as a force acting on the TCP, the acting force and the target force fLt are analyzed according to a motion equation, and thus a description will be made assuming that the target force fLt is converted into a force at a position of the TCP. Of course, the target force fLt may not be defined depending on steps, and, in this case, position control accompanied by force control is performed.

Here, the letter L is assumed to indicate any one of directions (x,y,z,Rx,Ry,Rz) of the axes defining the robot coordinate system. L is assumed to also indicate a position in the L direction. For example, in a case of L=x, an x direction component of a target position set in the robot coordinate system is expressed as Lt=xt, and an x direction component of a target force is expressed as fLt=fxt.

In order to perform position control or force control, the control unit 43 may acquire states of the robots 1 to 3. In other words, the control unit 43 may acquire the rotation angle Da of each of the motors M1 to M6, and convert the rotation angle Da into the position L (x,y,z,Rx,Ry,Rz) of the TCP in the robot coordinate system on the basis of the correspondence relationship U1. The control unit 43 may refer to the correspondence relationship U2, and specify a force actually acting on the force sensor P in the robot coordinate system by converting the force into an acting force fL acting on the TCP on the basis of the position L of the TCP, and a detection value in and a position of the force sensor P.

In other words, the force acting on the force sensor P is defined in the sensor coordinate system. Therefore, the control unit 43 specifies the acting force fL acting on the TCP in the robot coordinate system on the basis of the position L of the TCP, the correspondence relationship U2, and a detection value in the force sensor P in the robot coordinate system. A torque acting on a robot may be calculated on the basis of the acting force fL and a distance from a tool contact point (a contact point between an end effector and a workpiece) to the force sensor P, and is specified as an fL torque component (not illustrated). The control unit 43 performs gravity compensation on the acting force fL. The gravity compensation is a process of removing the gravity component from the acting force fL. The gravity compensation may be realized, for example, by examining the gravity component of the acting force fL acting on the TCP for each attitude of the TCP, and subtracting the gravity component from the acting force fL.

If the acting force fL other than the gravity required to act on the TCP and the target force fLt required to act on the TCP are specified, the force control portion 43b acquires a correction amount ΔL (hereinafter, a force derived correction amount ΔL) based on impedance control in a state in which an object such as a target object is present at the TCP, and a force can act on the TCP. In other words, the force control portion 43b refers to the parameters 44a, acquires the target force fLt and the impedance parameters m, d and k, and acquires the force derived correction amount ΔL by assigning the values to a motion equation (1). The force derived correction amount ΔL indicates the magnitude of the position L which the TCP is required to move in order to cancel a force deviation ΔfL(t) between the target force fLt and the acting force fL in a case where the TCP receives mechanical impedance.

$$m\Delta\ddot{L}(t) + d\Delta\dot{L}(t) + k\Delta L(t) = \Delta f_L(t) \quad \cdots (1)$$

(1) The left side of Equation (1) is formed of a first term obtained by multiplying a second-order differential value of the position L of the TCP by the virtual inertial coefficient m, a second term obtained by multiplying a differential value of the position L of the TCP by the virtual viscosity coefficient d, and a third term obtained by multiplying the position L of the TCP by the virtual elasticity coefficient k. The right side of Equation (1) is formed of the force deviation ΔfL(t) obtained by subtracting the actual acting force fL from the target force fLt. The differential in Equation (1) indicates a differential based on time.

In a case where the force derived correction amount ΔL is obtained, the control unit 43 converts each of operation positions in the directions of the axes defining the robot coordinate system into the target angle Dt which is a target rotation angle of each of the motors M1 to M6 on the basis of the correspondence relationship U1. The servo 43d calculates a drive position device De (=Dt-Da) by subtracting each of outputs (rotation angles Da) from the encoders E1 to E6 which are actual rotation angles of the motors M1 to M6 from the target angle Dt. The servo 43d refers to the parameters 44a, acquires the servo gains Kpp, Kpi, Kpd, Kvp, Kvi and Kvd, and derives a control amount Dc by adding together values obtained by multiplying the servo gains Kvp, Kvi and Kvd by drive speed deviations which are difference between values by multiplying the servo gains Kpp, Kpi and Kpd by the drive position deviation De, and a drive speed which is a time differential value of the actual rotation angle Da. The control amount Dc is specified for each of the motors M1 to M6, and each of the motors M1 to M6 is controlled on the basis of the control amount Dc of each of the motors M1 to M6. A signal used to control the motors M1 to M6 in the control unit 43 is a pulse width modulation (PWM) signal.

A mode in which the control amount Dc is derived from the target force fLt on the basis of the motion equation, and the motors M1 to M6 are controlled will be referred to as a force control mode. The control unit 43 does not perform force control in a step in a noncontact state in which a constituent element such as the end effector does not receive a force from a target object W, and controls the motors M1 to M6 according to rotation angles derived through linear calculation on the basis of target positions. A mode in which the motors M1 to M6 are controlled according to rotation angles derived through linear calculation on the basis of target positions will be referred to as a position control mode. The control unit 43 may control the robot 1 in a hybrid mode in which rotation angles derived through linear calculation on the basis of target positions and rotation angles derived by assigning target forces to the motion equation are integrated through, for example, linear combination, and the motors M1 to M6 are controlled according to the integrated rotation angles. Such a mode may be determined in advance by the robot program 44b.

In a case where control is performed in the position control mode or the hybrid mode, the position control portion 43a acquires the target position Lt in each minute step. In a case where the target position Lt in each minute step is obtained, the control unit 43 converts an operation position in each direction of the axes defining the robot coordinate system into the target angle Dt which is a target rotation angle of each of the motors M1 to M6 on the basis of the correspondence relationship U1. The servo 43d refers to the parameters 44a, acquires the servo gains Kpp, Kpi, Kpd, Kvp, Kvi and Kvd, and derives the control amount Dc on the basis of the target angle Dt. The control amount Dc is specified for each of the motors M1 to M6, and each of the motors M1 to M6 is controlled on the basis of the control amount Dc of each of the motors M1 to M6. As a result, in each step, the TCP moves from the start point to the end point according to the acceleration and deceleration characteristics via the target position Lt in each minute step.

In the hybrid mode, the control unit 43 specifies an operation position (Lt + ΔL) by adding the target position Lt in each minute step to the force derived correction amount ΔL, acquires the target angle Dt on the basis of the operation position, and also acquires the control amount Dc.

The contact determination portion 43c executes a function of determining whether or not the robots 1 to 3 come into contact with an object not expected in work. In the present embodiment, the contact determination portion 43c acquires an output from the force sensor P of each of the robots 1 to 3, and determines that the robots 1 to 3 come into contact with an object not expected in work in a case where the output exceeds a reference value set in advance. In this case, various processes may be performed, but, in the present embodiment, the contact determination portion 43c sets the control amount Dc of each of the robots 1 to 3 to 0 so as to stop the robots 1 to 3. A control amount of when the robots are stopped may employ various control amounts, and there may be a configuration in which the robots 1 to 3 are operated in a control amount for canceling out the previous control amount Dc.

(3) Pickup process

Next, a description will be made of operations of the robots 1 to 3 having the above-described configuration. Herein, as an example, a description will be made of work in which illumination is performed with the illumination unit 22 of the robot 2, and the target object W imaged by the imaging unit 21 of the robot 1 is picked up by the gripper 23 of the robot 3. Of course, work performed by the robots 1 to 3 is not limited to the pickup work, and may be applied to various pieces of work (for example, screw fastening work, insertion work, drilling work, deburring work, polishing work, assembling work, and product checking work). The pickup process is realized by processes performed by the detection unit 42 and the control unit 43 according to a robot control program in which above-described commands are described. In the present embodiment, the pickup process is performed in a state in which the target object W is disposed on the work table.

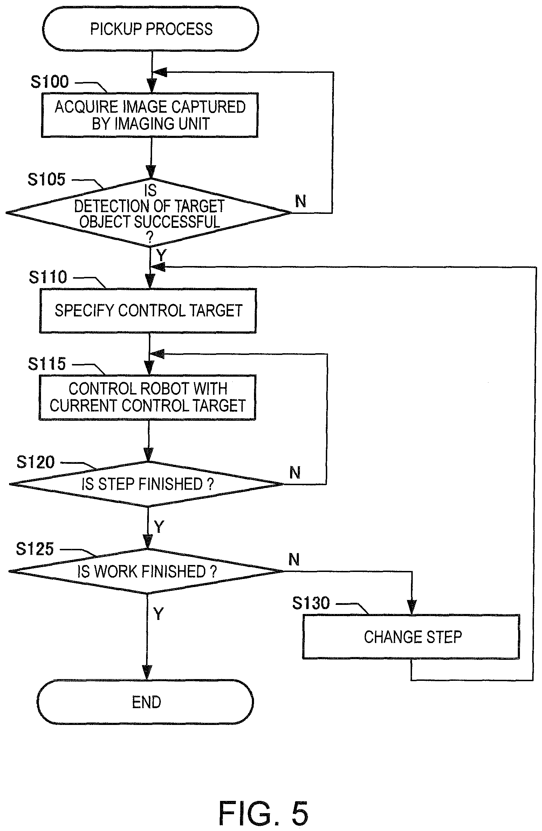

Fig. 5 is a flowchart illustrating the pickup process. If the pickup process is started, the detection unit 42 acquires an image captured by the imaging unit 21 (step S100). In other words, the detection unit 42 refers to the parameters 44a so as to specify a position of the illumination unit 22, and delivers the position to the position control portion 43a. As a result, the position control portion 43a performs position control in which the current position of the illumination unit 22 is set as a start point, and a position of the illumination unit 22 indicated by the parameters 44a is set as an end point, and moves the illumination unit 22 to the position of the illumination unit indicated by the parameters 44a. Next, the detection unit 42 refers to the parameters 44a so as to specify brightness in the illumination unit 22, and controls the illumination unit 22 to set brightness of illumination to the brightness.

The detection unit 42 refers to the parameters 44a so as to specify a position of the imaging unit 21, and delivers the position to the position control portion 43a. As a result, the position control portion 43a performs position control in which the current position of the imaging unit 21 is set as a start point, and a position of the imaging unit 21 indicated by the parameters 44a is set as an end point, and moves the imaging unit 21 to the position of the imaging unit indicated by the parameters 44a. Next, the detection unit 42 refers to the parameters 44a so as to specify an exposure time and an aperture of the imaging unit 21, and controls the imaging unit 21 to set an exposure time and an aperture to the exposure time and the aperture. If setting of the exposure time and the aperture is completed, the imaging unit 21 captures an image, and outputs the image to the detection unit 42. The detection unit 42 acquires the image.

Next, the detection unit 42 determines whether or not detection of the target object is successful on the basis of the image (step S105). In other words, the detection unit 42 refers to the parameters 44a so as to specify an image processing sequence, and performs each process indicated by the image processing sequence at an intensity indicated by the parameters 44a. The detection unit 42 refers to the template data 44c so as to compare a difference between the template data 44c and the image with a threshold value, and determines that detection of the target object is successful in a case where the difference is equal to or less than the threshold value.

In a case where it is determined that detection of the target object is not successful in step S105, the detection unit 42 changes at least one of a relative position between the template data 44c and the image, and a size of the template data 44c, and repeatedly performs the processes in step S100 and the subsequent steps. On the other hand, in a case where it is determined that detection of the target object is successful in step S105, the control unit 43 specifies a control target (step S110).

The pickup process in this example is work in which the gripper 23 of the robot 3 is moved in accordance with a positional attitude of the target object W detected by the detection unit 42 such that an attitude of the robot 3 is changed, and the target object W is picked up with the gripper 23, the target object W is moved to a predetermined position, and then the target object W is released from the gripper 23 . Therefore, the position control portion 43a and the force control portion 43b specify a plurality of steps forming a series of work on the basis of the robot program 44b.

A step in which a control target is specified is a step which is not processed and is present earlier in a time series among the respective steps. In a case where a step in which a control target is specified is a step related to the force control mode, the force control portion 43b refers to the force control parameters of the parameters 44a so as to acquire the force control coordinate system and the target force. The force control portion 43b converts the target force into the target force $fLt$ in the robot coordinate system on the basis of the force control coordinate system. The force control portion 43b converts an output from the force sensor P into the acting force $fL$ acting on the TCP. The force control portion 43b refers to the force control parameters of the parameters 44a, and acquires the force derived correction amount $\Delta L$ as a control target on the basis of the impedance parameters m, d and k.

In a case where a step in which a control target is specified is a step related to the position control mode, the position control portion 43a subdivides the step into minute steps. The position control portion 43a refers to the operation parameters of the parameters 44a, and acquires the target position $Lt$ in each minute step as a control target on the basis of the start point, the end point, and the acceleration and deceleration characteristics. In a case where a step in which a control target is specified is a step related to the hybrid mode, the position control portion 43a subdivides the step into minute steps, refers to the force control parameters of the parameters 44a, acquires the target position $Lt$ in each minute step on the basis of the start point, the end point, and the acceleration and deceleration characteristics, and acquires the force derived correction amount $\Delta L$ on the basis of the force control coordinate system, the target force $fLt$, the impedance parameters, and the acting force $fL$. The target position $Lt$ and the force derived correction amount $\Delta L$ are control targets.

In a case where the control targets are specified, the servo 43d controls the robot 3 at the current control targets (step S115). In other words, in a case where the current step is a step related to the force control mode or the hybrid mode, the servo 43d refers to the force control parameters of the parameters 44a so as to specify the control amount Dc corresponding to the control targets on the basis of the servo gains, and controls each of the motors M1 to M6. In a case where the current step is a step related to the position control mode, the servo 43d refers to the operation parameters of the parameters 44a so as to specify the control amount Dc corresponding to the control targets on the basis of the servo gains, and controls each of the motors M1 to M6.

Next, the control unit 43 determines whether or not the current step is finished (step S120). The determination may be performed under various finish determination conditions, and, in a case of position control, the conditions are that, for example, the TCP has reached a target position, or the TCP has been set at the target position. In a case of force control, the conditions are that, for example, an acting force changes to a magnitude of a designated magnitude or more or to a magnitude of a designated magnitude or less from a state in which the acting force matches a target force, or the TCP is deviated from a designated range. The former conditions may be that, for example, an operation of gripping a target object in pickup work is completed, or cancelation of a gripping operation is completed. The latter conditions may be that, for example, a drill has penetrated through a target object in penetration work for the target object using the drill.

Of course, in a case where each step is evaluated to fail, the step may be determined as being finished. However, in this case, preferably, work is stopped or suspended. A finish determination condition for determining a failure in a step may include a case where, for example, a movement speed or acceleration of the TCP exceeds an upper limit value, or a time-out occurs. Whether or not the finish determination condition is satisfied may be determined by using various sensors, the force sensor P, the imaging unit 21, or other sensors.

In a case where it is determined that the current step is not finished in step S120, the control unit 43 performs the processes in step S115 and the subsequent steps on the next minute step after a minute time ΔT elapses. In other words, in a case where the current step is in the position control mode or the hybrid mode, the position control portion 43a sets the target position Lt in the next minute step as a control target, and controls the robot 3. In a case where the current step is in the force control mode or the hybrid mode, the force control portion 43b acquires the acting force fL on the basis of an output from the force sensor P again, sets the force derived correction amount ΔL specified on the basis of the latest acting force fL as a control target, and controls the robot 3.

In a case where it is determined that the current step is finished in step S120, the control unit 43 determines whether or not the work is finished (step S125). In other words, in a case where the step determined as being finished in step S120 is the last step, the control unit 43 determines that the work is finished. In a case where it is determined that the work is not finished in step S125, the control unit 43 changes the next step in the work sequence to the current step (step S130), and performs the processes in step S110 and the subsequent steps. In a case where it is determined that the work is finished in step S125, the control unit 43 determines that the work is finished, and finishes the pickup process.

(4) Learning process

The control device 40 according to the present embodiment can control the robots 1 to 3 on the basis of the parameters 44a as described above. In the above-described embodiment, the parameters 44a are generated through teaching, but it is hard to optimize the parameters 44a through artificial teaching.

For example, regarding detection of the target object W in the detection unit 42, even for the same target object W, various factors such as a position of the target object W, an image or a position of the target object in a picture, and a shadow occurring in the target object W may be changed if optical parameters are different from each other. Therefore, if an optical parameter is changed, the detection accuracy for the target object W in the detection unit 42 may be changed. In a case where the optical parameter is changed, how the detection accuracy for the target object W is changed is not necessarily clear.

The operation parameters or the force control parameters are used for control of the robots 1 to 3, but robots such as the robots 1 to 3 having a plurality of degrees of freedom (movable axes) can be operated in a considerably large number of patterns. For the robots 1 to 3, patterns are required to be determined such that undesirable operations such as vibration, abnormal noise, and overshoot are not generated. In a case where various devices are attached as end effectors, the centroids of the robots 1 to 3 may change, and thus optimal operation parameters and force control parameters may also change. In a case where the operation parameters or the force control parameters are changed, how operations of the robots 1 to 3 are changed is not necessarily clear.

The force control parameters are used in a case where force control is performed on the robots 1 to 3, but, in a case where the force control parameters are changed for each piece of work performed by the robots 1 to 3, how operations of the robots 1 to 3 are changed is not necessarily clear. For example, it is hard to estimate an optimal impedance parameter in any direction for all work steps. Thus, it is necessary to undergo a considerably lot of trial and error in order to increase the detection accuracy of the detection unit 42 or to extract latent performance of the robots 1 to 3.

However, since it is hard to artificially undergo a considerably lot of trial and error, it is hard to artificially realize a state in which the detection accuracy for the target object W is sufficiently high, and the detection accuracy is evaluated to reach a substantially upper limit, or a state in which latent performance of the robots 1 to 3 appears (a state in which further improvement of performance such as a required time or power consumption is difficult). An operator familiar with a change in the detection accuracy or changes in operations of the robots 1 to 3 due to changes of the parameters 44a is necessary in order to adjust the parameters 44a, and it is hard for an operator not familiar therewith to adjust the parameters 44a. A system normally requiring a skilled operator is inconvenient.

Therefore, in the present embodiment, there is provided a configuration for automatically determining the parameters 44a without artificially performing work of determining the parameters 44a. According to the present embodiment, it is possible to realize a state in which it is estimated that the detection accuracy is not improved any longer through changes of some of the parameters 44a (the detection accuracy is evaluated to be the maximum) or a state in which it is estimated that performance of the robots 1 to 3 is not improved any longer through changes of some of the parameters 44a (the performance is evaluated to be the best). In the present embodiment, such states will be referred to as optimized states.

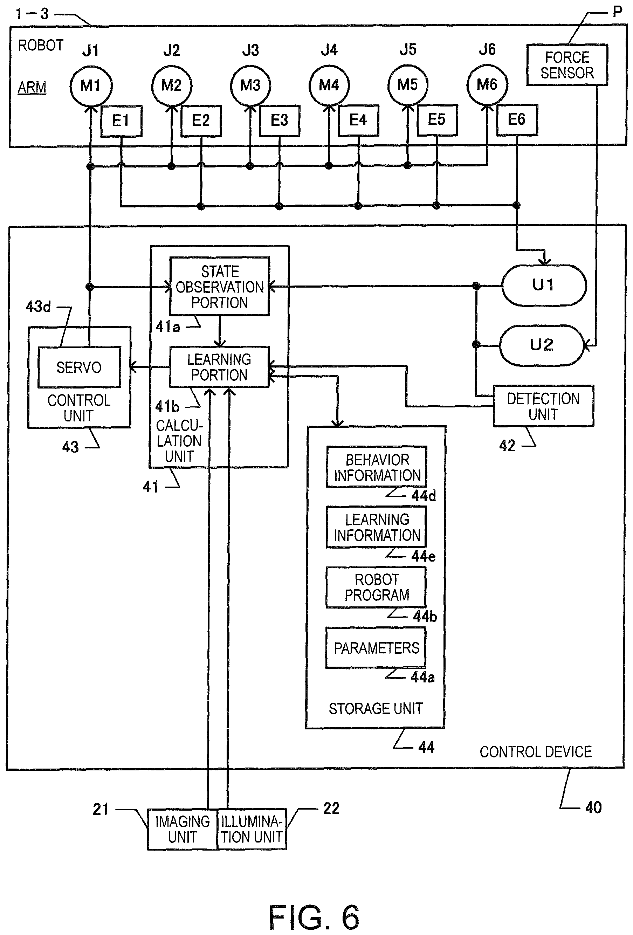

In the present embodiment, the control device 40 includes the calculation unit 41 in order to automatically determine the parameters 44a. In the present embodiment, the calculation unit 41 can calculate optical parameters, operation parameters, and force control parameters by using machine learning. Fig. 6 is a diagram illustrating a configuration of the calculation unit 41, and is a diagram illustrating details of the calculation unit 41 by omitting some of the constituent elements illustrated in Fig. 2. The storage unit 44 illustrated in Fig. 6 is the same storage medium as the storage unit 44 illustrated in Fig. 2, and part of the stored information is not illustrated in each drawing.

The calculation unit 41 includes a state observation portion 41a observing a state variable, and a learning portion 41b learning the parameters 44a on the basis of an observed state variable. In the present embodiment, the state observation portion 41a observes a result generated by changing the parameters 44a, as a state variable. Thus, the state observation portion 41a may acquire, as state variables, a control result of the servo 43d, values of the encoders E1 to E6, an output from the force sensor P, and an image acquired by the detection unit 42.

Specifically, the state observation portion 41a observes values of currents supplied to the motors M1 to M6 as a control result of the servo 43d. The current values correspond to torques output from the motors M1 to M6. An output from each of the encoders E1 to E6 is converted into a position of the TCP in the robot coordinate system on the basis of the correspondence relationship U1. Therefore, the state observation portion 41a can observe a position of the imaging unit 21 in the robot 1, a position of the illumination unit 22 in the robot 2, and a position of the gripper 23 in the robot 3.

An output from the force sensor P is converted into an acting force acting on the TCP in the robot coordinate system on the basis of the correspondence relationship U2. Therefore, the state observation portion 41a can observe acting forces on the robots 1 to 3 as state variables. An image acquired by the detection unit 42 is an image captured by the imaging unit 21, and the state observation portion 41a can observe the image as a state variable. The state observation portion 41a may select an observation target state variable as appropriate according to a learning target parameter 44a.

The learning portion 41b may optimize the parameters 44a through learning, and optimizes the parameters 44a through reinforcement learning in the present embodiment. Specifically, the learning portion 41b determines a behavior of changing the parameters 44a on the basis of a state variable, and performs the behavior. If a reward is evaluated according to a state after the behavior, a behavior value of the behavior is determined. Therefore, the calculation unit 41 optimizes the parameters 44a by repeating observation of a state variable, determination of a behavior corresponding to the state variable, and evaluation of a reward obtained through the behavior.

In the present embodiment, the calculation unit 41 may select a learning target parameter from among the parameters 44a so as to learn the parameter. In the present embodiment, learning of optical parameters, learning of operation parameters, and learning of force control parameters may be separately performed.

(4-1) Learning of optical parameters

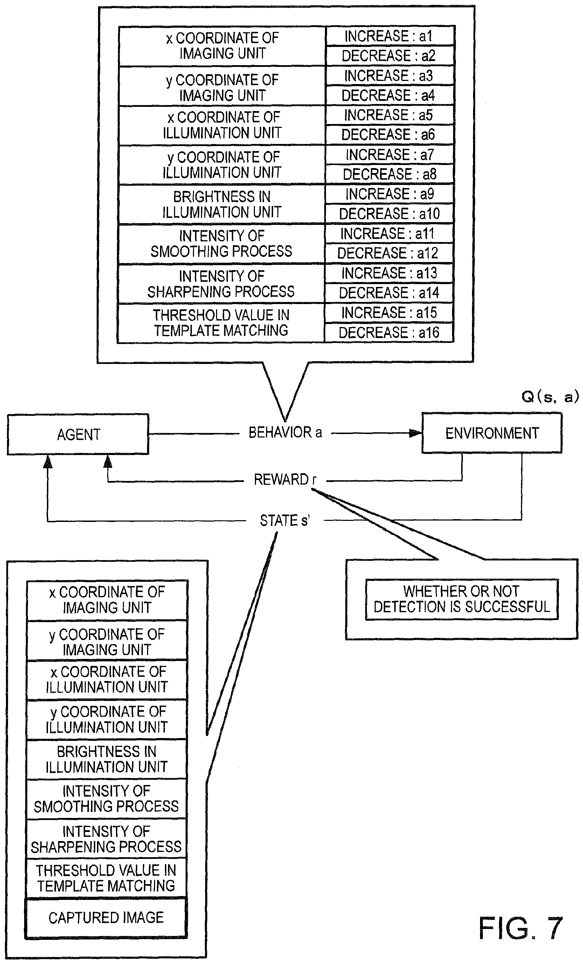

Fig. 7 is a diagram for explaining learning examples of optical parameters according to a reinforcement learning model formed of an agent and an environment. The agent illustrated in Fig. 7 corresponds to a function of selecting a behavior a according to a measure set in advance, and is realized by the learning portion 41b. The environment corresponds to a function of determining the next state s' on the basis of the behavior a selected by the agent and the current state s, and immediately determining a reward r on the basis of the behavior a, the state s, and the state s', and is realized by the state observation portion 41a and the learning portion 41b.

In the present embodiment, Q learning is employed in which a behavior value function $Q(s,a)$ of the behavior a in a certain state s is calculated by repeatedly performing a process in which the learning portion 41b selects the behavior a according to a measure set in advance, and the state observation portion 41a updates the state. In other words, in this example, the behavior value function is updated according to the following Expression (2). In a case where the behavior value function $Q(s,a)$ converges appropriately, the behavior a maximizing the behavior value function $Q(s,a)$ is regarded as an optimal behavior, and the parameters 44a indicating the behavior a is regarded as optimized parameters.

$$Q(s_t, a_t) \leftarrow Q(s_t, a_t) + \alpha\left(r_{t+1} + \gamma \max_{a'} Q(s_{t+1}, a') - Q(s_t, a_t)\right) \cdots (2)$$

Here, the behavior value function $Q(s,a)$ is an expected value of profits (a sum total of discount rewards) obtained in the future in a case where the behavior a is taken in the state s. A reward is indicated by r, and the subscript t of the state s, the behavior a, and the reward r is a number (referred to as a trial number) indicating one step in a trial process repeated in a time series, and the trial number is incremented if a state changes after the behavior is determined. Therefore, the reward $r_{t+1}$ in Expression (2) is a reward obtained in a case where a behavior $a_t$ is selected in a state $s_t$, and then a state $s_{t+1}$ occurs. Here, $\alpha$ indicates a learning ratio, and $\gamma$ indicates a discount ratio. In addition, a' indicates a behavior maximizing a behavior value function $Q(s_{t+1}, a_{t+1})$ among behaviors $a_{t+1}$ which can be taken in the state $s_{t+1}$, and $\max_{a'} Q(s_{t+1}, a')$ is a behavior value function maximized by selecting the behavior a'.

Regarding of learning of optical parameters, changing the optical parameters corresponds to determination of a behavior, and behavior information 44d indicating a learning target parameter and a behavior which can be taken is recorded in the storage unit 44 in advance. In other words, an optical parameter described as a learning target in the behavior information 44d is a learning target. Fig. 7 illustrates an example in which some imaging unit parameters, illumination unit parameters, and image processing parameters of the optical parameters are learning targets.

Specifically, an x coordinate and a y coordinate of the imaging unit 21 are learning targets among the imaging unit parameters. Therefore, in this example, a z coordinate or rotations (attitudes) about xyz axes are not learning targets, the imaging unit 21 is directed toward the work table on which the target object W is placed, and movement of the imaging unit 21 in an x-y plane is a learning target. Of course, other imaging unit parameters, for example, an attitude, a z coordinate, an exposure time, and an aperture of the imaging unit 21 may be learning targets.

In the example illustrated in Fig. 7, among the illumination unit parameters, an x coordinate and a y coordinate of the illumination unit 22, and brightness in the illumination unit are learning targets. Therefore, in this example, a z coordinate or rotations (attitudes) about xyz axes are not learning targets, the illumination unit 22 is directed toward the work table on which the target object W is placed, and movement of the illumination unit 22 in an x-y plane is a learning target. Of course, other imaging unit parameters, for example, an attitude or a z coordinate of the illumination unit 22 may be a learning target.

In the example illustrated in Fig. 7, among the image processing parameters, an intensity of a smoothing process, an intensity of a sharpening process, and a threshold value in template matching are learning targets. Therefore, in this example, an image processing sequence is not a learning target, and thus the image processing sequence for images captured by the imaging unit 21 is not changed (of course, an embodiment in which the image processing sequence is a learning target may be employed).

In the example illustrated in Fig. 7, a behavior includes a behavior increasing a value by a predetermined value and a behavior decreasing a value by a predetermined value. Therefore, a total number of behaviors which can be taken for a total of eight parameters illustrated in Fig. 7 is sixteen (behavior a1 to behavior a16). Since the behavior information 44d indicates a learning target parameter and a behavior which can be taken, in the example illustrated in Fig. 7, the illustrated eight parameters are described in the behavior information 44d as learning targets. Information (an ID of a behavior, a change amount in each behavior, or the like) for specifying each behavior is described in the behavior information 44d.

In the example illustrated in Fig. 7, a reward is specified on the basis of whether or not detection of the target object W is successful. In other words, the learning portion 41b changes the optical parameters corresponding the behavior a, then operates the robots 1 and 2 according to the optical parameters, and causes the detection unit 42 to acquire an image captured by the imaging unit 21. The learning portion 41b performs a template matching process on the basis of the optical parameters, and determines whether or not detection of the target object W is successful. The learning portion 41b determines a reward for the behavior a, and the states s and s' depending on whether or not the detection is successful. The reward may be determined on the basis of whether or not detection of the target object W is successful, and, for example, a configuration may be employed in which a positive (for example, +1) reward is given to success in detection, and a negative (for example, -1) reward is given to failure in detection. According to this configuration, optimization can be performed such that a detection accuracy of a target object is increased.

The next state s' in a case where the behavior a is employed in the current state s may be specified by operating the robots 1 and 2 after changing the parameters corresponding to the behavior a, and then by observing a state in the state observation portion 41a. The robot 3 is not operated in learning of the optical parameters in this example. In the example illustrated in Fig. 7, the state variables include the x coordinate and the y coordinate of the imaging unit 21, the x coordinate and the y coordinate of the illumination unit 22, the brightness in the illumination unit 22, the intensity of the smoothing process, the intensity of the sharpening process, and the threshold value in template matching, and the image captured by the imaging unit 21.

Therefore, in this example, the state observation portion 41a performs the behavior a, then converts outputs from the encoders E1 to E6 of the robot 1 on the basis of the correspondence relationship U1, and observes the x coordinate and the y coordinate of the imaging unit 21. The state observation portion 41a performs the behavior a, then converts outputs from the encoders E1 to E6 of the robot 2 on the basis of the correspondence relationship U1, and observes the x coordinate and the y coordinate of the illumination unit 22.

In the present embodiment, the brightness in the illumination unit 22 is regarded to be able to be adjusted without any error by using the parameters 44a (or regarded not to be influenced by an error), and the state observation portion 41a acquires the brightness in the illumination unit included in the parameters 44a, and thus regards state variables to be observed. Of course, the brightness in the illumination unit 22 may be actually measured with a sensor or the like, and may be observed on the basis of an image captured by the imaging unit 21 (for example, on the basis of an average grayscale value). The state observation portion 41a also acquires the current values by referring to the parameters 44a with respect to the intensity of the smoothing process, the intensity of the sharpening process, and the threshold value in template matching, and regards state variables to be observed.

The state observation portion 41a acquires, as a state variable, an image which is captured by the imaging unit 21 and is acquired by the detection unit 42 (a thick frame illustrated in Fig. 7). In other words, the state observation portion 41a observes a grayscale value of each pixel of the image (which may be an image of a region of interest or the like in which a target object may be present) captured by the imaging unit 21 as a state variable. The x coordinate or the like of the imaging unit is a behavior and is also an observation target, but an image captured by the imaging unit 21 is not a behavior. Therefore, in this meaning, a captured image is a state variable of which a change is hard to directly estimate on the basis of changes in the optical parameters. Since the detection unit 42 detects a target object on the basis of the image, the image is a state variable which may directly influence whether or not detection of the target object is successful. Therefore, by observing the image as a state variable, a parameter which is hard to artificially improve can be improved, and thus an optical parameter can be optimized such that the detection accuracy in the detection unit 42 is effectively increased.

(4-2) Learning example of optical parameters

Next, a description will be made of a learning example of optical parameters. Information indicating a variable or a function which is referred to in the process of learning is stored in the storage unit 44 as learning information 44e. In other words, the calculation unit 41 has a configuration of causing the behavior value function $Q(s,a)$ to converge by repeating observation of a state variable, determination of a behavior corresponding to the state variable, and evaluation of a reward obtained through the behavior. Therefore, in this example, time-series values of the state variable, the behavior, and the reward are sequentially recorded in the learning information 44e in the process of learning.

The behavior value function $Q(s,a)$ may be calculated according to various methods, and may be calculated on the basis of many trials, but, in the present embodiment, the Deep Q-Network (DQN) which is one of the methods of approximately calculating the behavior value function $Q(s,a)$ is used. In the DQN, the behavior value function $Q(s,a)$ is estimated by using a multilayer neural network. In this example, a multilayer neural network to which the state s is input, and which outputs values of the behavior value functions $Q(s,a)$ of the number N of selectable behaviors, is employed.

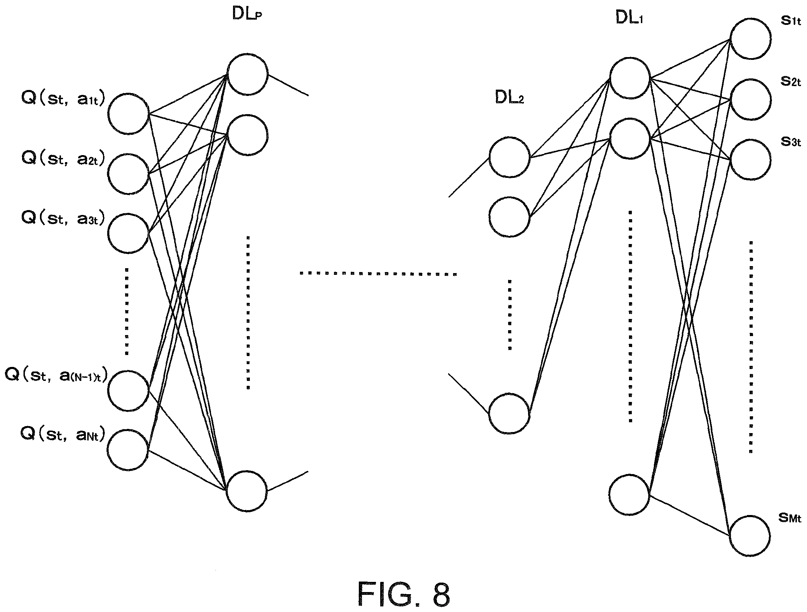

Fig. 8 is a diagram schematically illustrating the multilayer neural network employed in this example. In Fig. 8, the multilayer neural network has M (where M is an integer of two or more) state variables as inputs, and has values of N (where N is an integer of two or more) behavior value functions Q as outputs. For example, in the example illustrated in Fig. 7, a sum of the eight state variables including the x coordinate of the imaging unit to the threshold value in template matching and the number of pixels of the captured image is M, and values of M state variables are input to the multilayer neural network. In Fig. 8, M state variables at the trial number t are indicated as $s_{1t}$ to $s_{Mt}$.

N is the number of selectable behaviors a, and an output from the multilayer neural network is a value of the behavior value function Q in a case where the specific behavior a is selected for the input state s. In Fig. 8, behavior value functions Q in selectable behaviors $a_{1t}$ to $a_{Nt}$ at the trial number t are indicated as $Q(s_t,a_{1t})$ to $Q(s_t,a_{Nt})$. The letters $s_t$ included in the behavior value function Q indicate a representative of the input states $s_{1t}$ to $s_{Mt}$. In the example illustrated in Fig. 7, sixteen behaviors can be selected, and thus N is 16. Of course, the content or the number (a value of N) of behaviors a or the content or the number (a value of M) of states s may be changed depending on the trial number t.

The multilayer neural network illustrated in Fig. 8 is a model performing calculation in which an input of the previous layer (the state s in a first layer) is multiplied by a weight w and is added to a bias b in each node of each layer, and an output undergoing an activation function is obtained (and is an input of the next layer) as necessary. In this example, P (where P is an integer of one or more) layers DL are present, and a plurality of nodes are present in each layer.

The multilayer neural network illustrated in Fig. 8 is specified by a weight, the bias b, and an activation function in each layer, and an order of layers. Therefore, in the present embodiment, parameters (information required to obtain an output from an input) for specifying the multilayer neural network are recorded in the storage unit 44 as the learning information 44e. During learning, variable values (for example, the weight w and the bias b) among the parameters for specifying the multilayer neural network are updated. Herein, a parameter of the multilayer neural network which is variable in the process of learning is indicated by $\theta$. The above behavior value functions $Q(s_t,a_{1t})$ to $Q(s_t,a_{Nt})$ may also be expressed as $Q(s_t,a_{1t}; \theta_t)$ to $Q(s_t,a_{Nt}; \theta_t)$ by using the parameter $\theta$.

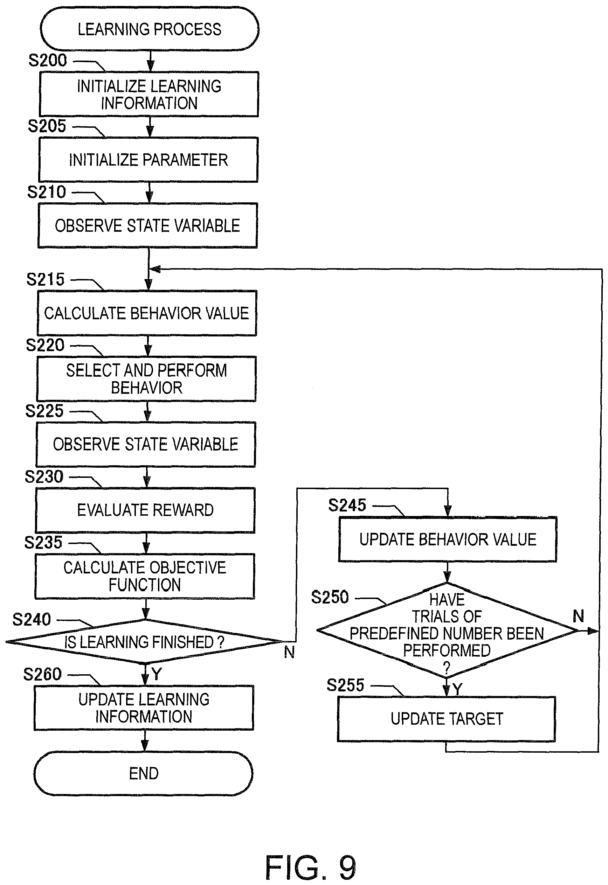

Next, a description will be made of an order of learning processes with reference to a flowchart shown in Fig. 9. A learning process for an optical parameter may be performed during operations of the robots 1 and 2, and the learning process may be performed in advance prior to actual operations . Herein, a description will be made of the learning process according to a configuration in which the learning process is performed in advance prior to actual operations (if a configuration in which the parameter $\theta$ indicating the multilayer neural network is optimized, the information is preserved, and is used for the next and subsequent operations).

If the learning process is started, the calculation unit 41 initializes the learning information 44e (step S200). In other words, the calculation unit 41 specifies an initial value of the parameter $\theta$ which is referred to when learning is started. The initial value may be determined according to various methods, and, in a case where learning was not performed in the past, any value or a random value may be used as an initial value of the parameter $\theta$, and a simulation environment for simulating optical characteristics of the robots 1 and 2, the imaging unit 21, or the illumination unit 22 may be prepared, and the parameter $\theta$ learned or estimated on the basis of the environment may be used as an initial value.

In a case where learning was performed in the past, the learned parameter θ is used as an initial value. In a case where a similar target was learned in the past, the parameter θ in the learning may be used as an initial value. The past learning may be performed by a user by using the robots 1 and 2, and may be performed by a manufacturer of the robots 1 and 2 before the robots 1 and 2 are sold. In this case, there may be a configuration in which a manufacturer prepares a plurality of initial value sets according to types of target objects or work, and a user selects an initial value during learning. In a case where an initial value of the parameter θ is determined, the initial value is stored in the learning information 44e as the current value of the parameter θ.

Next, the calculation unit 41 initializes a parameter (step S205). Herein, since an optical parameter is a learning target, the calculation unit 41 initializes an optical parameter. In other words, the calculation unit 41 converts outputs from the encoders E1 to E6 of the robot 1 on the basis of the correspondence relationship U1, and sets a position of the imaging unit 21 as an initial value. The calculation unit 41 sets an initial exposure time (the latest exposure time in a case where learning was performed in the past) set in advance as an initial value of an exposure time of the imaging unit 21. The calculation unit 41 outputs a control signal to the imaging unit 21 such that a value of the current aperture is set as an initial value.

In other words, the calculation unit 41 converts outputs from the encoders E1 to E6 of the robot 2 on the basis of the correspondence relationship U1, and sets a position of the illumination unit 22 as an initial value. The calculation unit 41 sets initial brightness (the latest brightness in a case where learning was performed in the past) set in advance as an initial value of brightness in the illumination unit 22. The calculation unit 41 sets initial values set in advance (the latest values in a case where learning was performed in the past) for an intensity of a smoothing process, an intensity of a sharpening process, a threshold value in template matching, and an image processing sequence. The initialized parameters are stored in the storage unit 44 as the current parameters 44a.

Next, the state observation portion 41a observes a state variable (step S210). In other words, the control unit 43 controls the robots 1 and 2 by referring to the parameters 44a and the robot program 44b. The detection unit 42 performs a process (corresponding to the above steps S100 and S105) of detecting the target object W on the basis of an image captured by the imaging unit 21 in a state after the control. Thereafter, the state observation portion 41a converts outputs from the encoders E1 to E6 of the robot 1 on the basis of the correspondence relationship U1, and observes the x coordinate and the y coordinate of the imaging unit 21. The state observation portion 41a converts outputs from the encoders E1 to E6 of the robot 2 on the basis of the correspondence relationship U1, and observes the x coordinate and the y coordinate of the illumination unit 22. The state observation portion 41a refers to the parameters 44a so as to acquire brightness to be set for the illumination unit 22, and regards a state variable to be observed.

The state observation portion 41a also acquires the current values by referring to the parameters 44a with respect to the intensity of the smoothing process, the intensity of the sharpening process, and the threshold value in template matching, and regards state variables to be observed. The state observation portion 41a acquires an image which is captured by the imaging unit 21 and is acquired by the detection unit 42, and acquires a grayscale value of each pixel as a state variable.

Next, the learning portion 41b calculates a behavior value (step S215). In other words, the learning portion 41b refers to the learning information 44e so as to acquire the parameter θ, inputs the latest state variable to the multilayer neural network indicated by the learning information 44e, and calculates N behavior value functions $Q(s_t, a_{1t}; \theta_t)$ to $Q(s_t, a_{Nt}; \theta_t)$.

The latest state variable is an observation result in step S210 in the first execution, and is an observation result in step S225 in the second and subsequent executions. The trial number t is 0 in the first execution, and is a value of 1 or greater in the second and subsequent executions. In a case where the learning process was not performed in the past, the parameter θ indicated by the learning information 44e is not optimized, and may thus be an inaccurate value as a value of the behavior value function Q, but the behavior value function Q is gradually optimized by repeatedly performing the processes in step S215 and the subsequent steps. In a case where the processes in step S215 and the subsequent steps are repeatedly performed, the state s, the behavior a, and the reward r are stored in the storage unit 44 in correlation with each trial number t, and may be referred to at any timing.

Next, the learning portion 41b selects and performs a behavior (step S220). In the present embodiment, a process is performed in which the behavior a maximizing the behavior value function Q(s,a) is regarded as an optimal behavior. Therefore, the learning portion 41b specifies the maximum value among values of the N behavior value functions $Q(s_t, a_{1t}; \theta_t)$ to $Q(s_t, a_{Nt}; \theta_t)$ calculated in step S215. The learning portion 41b selects a behavior giving the maximum value. For example, if $Q(s_t, a_{Nt}; \theta_t)$ is the maximum value among the N behavior value functions $Q(s_t, a_{1t}; \theta_t)$ to $Q(s_t, a_{Nt}; \theta_t)$, the learning portion 41b selects the behavior $a_{Nt}$.

If the behavior is selected, the learning portion 41b changes the parameters 44a corresponding to the behavior. For example, in the example illustrated in Fig. 7, in a case where the behavior a1 increasing the x coordinate of the imaging unit by a predetermined value is selected, the learning portion 41b increases the x coordinate by the predetermined value at a position of the imaging unit indicated by the imaging unit parameter of the optical parameters. In a case where the parameters 44a are changed, the control unit 43 controls the robots 1 and 2 by referring to the parameters 44a. The detection unit 42 performs a process of detecting the target object W on the basis of an image captured by the imaging unit 21 in a state after the control.

Next, the state observation portion 41a observes a state variable (step S225). In other words, the state observation portion 41a performs the same process as in the observation of a state variable in step S210, and acquires, as state variables, an x coordinate and a y coordinate of the imaging unit 21, an x coordinate and a y coordinate of the illumination unit 22, brightness to be set for the illumination unit 22, an intensity of a smoothing process, an intensity of a sharpening process, a threshold value in template matching, and a grayscale value of each pixel of an image captured by the imaging unit 21. In a case where the current trial number is t (in a case where a selected behavior is $a_t$), the state s acquired in step S225 is a state $s_{t+1}$.

Next, the learning portion 41b evaluates a reward (step S230). In this example, the reward is determined on the basis of whether or not detection of the target object W is successful. Therefore, the learning portion 41b acquires whether or not detection of the target object is successful (whether or not detection of the target object is successful in step S105) from the detection unit 42, acquires a positive reward of a predefined amount if the detection is successful, and acquires a negative reward of a predefined amount if the detection is not successful. In a case where the current trial number is t, the reward r acquired in step S230 is a reward $r_{t+1}$.

The present embodiment is aimed to update the behavior value function Q shown in Expression (2), but, in order to appropriately update the behavior value function Q, the multilayer neural network indicating the behavior value function Q is required to be optimized ($\theta$ is required to be optimized). In order to appropriately output the behavior value function Q by using the multilayer neural network illustrated in Fig. 8, teacher data which is a target of the output is necessary. The multilayer neural network is expected to be optimized by improving the parameter $\theta$ such that an error between an output from the multilayer neural network and a target is minimized.

However, in the present embodiment, in a stage in which learning is not completed, there are no findings of the behavior value function Q, and it is hard to specify a target. Therefore, in the present embodiment, the parameter $\theta$ indicating the multilayer neural network is improved by using an objective function minimizing the second term of Expression (2), that is, a so-called temporal difference (TD) error. In other words, $(r_{t+1}+\gamma \max_{a'} Q(s_{t+1}, a'; \theta_t))$ is used as a target, and the parameter $\theta$ is learned such that an error between the target and $Q(s_t, a_t; \theta_t)$ is minimized. However, since the target $(r_{t+1}+\gamma \max_{a'} Q(s_{t+1}, a'; \theta_t))$ includes the parameter $\theta$ as a learning target, in the present embodiment, a target is fixed (to, for example, the parameter $\theta$ learned last (an initial value of $\theta$ in first learning)) over some trials. In the present embodiment, the number of trials over which a target is fixed is predefined.

Since learning is performed on the premise, if the reward is evaluated in step S230, the learning portion 41b calculates an objective function (step S235). In other words, the learning portion 41b calculates an objective function (for example, a function which is proportion to an expected value of the square of a TD error or a sum total of the squared TD errors) for evaluating a TD error in each trial. Since the TD error is calculated in a state in which a target is fixed, if the fixed target is expressed as $(r_{t+1}+\gamma \max_{a'} Q(s_{t+1}, a'; \theta-))$, the TD error is expressed as $(r_{t+1}+\gamma \max_{a'} Q(s_{t+1}, a'; \theta_-)) - Q(s_t, a_t; \theta_t)$. In the equation of the TD error, the reward $r_{t+1}$ is a reward obtained in step S230 due to the behavior $a_t$.

$\max_{a'} Q(s_{t+1}, a'; \theta_-)$ is the maximum value among outputs obtained in a case where the state $s_{t+1}$ calculated in step S225 due to the behavior $a_t$ is input to a multilayer neural network specified by the fixed parameter $\theta_-$. $Q(s_t, a_t; \theta_t)$ is a value of an output corresponding to the behavior $a_t$ among outputs obtained in a case where the state $s_t$ before the behavior $a_t$ is selected is input to a multilayer neural network specified by the parameter $\theta_t$ in the stage at the trial number t.

In a case where the objective function is calculated, the learning portion 41b determines whether or not learning is finished (step S240). In the present embodiment, a threshold value for determining whether or not a TD error is sufficiently small is predefined, and, in a case where the objective function is equal to or less than the threshold value, the learning portion 41b determines that learning is finished.

In a case where it is determined that learning is not finished in step S240, the learning portion 41b updates a behavior value (step S245). In other words, the learning portion 41b specifies a change in the parameter $\theta$ for reducing the objective function on the basis of a partial differential using the parameter $\theta$ of the TD error, and changes the parameter $\theta$. Of course, herein, the parameter $\theta$ may be changed according to various methods, and, for example, a method of gradient decent such as RMSProp may be employed. Adjustment using a learning ratio may be performed as appropriate. According to the above-described processes, the parameter $\theta$ can be changed such that the behavior value function Q comes close to a target.

However, in the present embodiment, since a target is fixed as described above, the learning portion 41b further determines whether or not the target is updated. Specifically, the learning portion 41b determines whether or not trials of a predefined number have been performed (step S250), and, in a case where it is determined that the trials of a predefined number have been performed in step S250, the learning portion 41b updates the target (step S255). In other words, the learning portion 41b updates the parameter $\theta$ referred to when calculating the target to the latest parameter $\theta$. Thereafter, the learning portion 41b repeatedly performs the processes in step S215 and the subsequent steps. On the other hand, in a case where it is determined that the trials of a predefined number have not been performed in step S250, the learning portion 41b skips the step S255, and repeatedly performs the processes in step S215 and the subsequent steps.

In a case where it is determined that learning is finished in step S240, the learning portion 41b updates the learning information 44e (step S260). In other words, the learning portion 41b records the parameter θ obtained through learning in the learning information 44e as the parameter θ which is to be referred to during work performed by the robots 1 and 2 or detection in the detection unit 42. In a case where the learning information 44e including the parameter θ is recorded, the detection unit 42 performs a process of detecting the target object on the basis of the parameters 44a when the robots 1 and 2 perform work as in steps S100 to S105. Observation of the current state in the state observation portion 41a and selection of a behavior in the learning portion 41b are repeatedly performed in a step in which imaging in the imaging unit 21 is repeatedly performed until detection in the detection unit 42 is successful. Of course, in this case, the learning portion 41b selects the behavior a giving the maximum value among the outputs Q(s,a) calculated with the state as an input. In a case where the behavior a is selected, the parameters 44a are updated to be values corresponding to a state in which the behavior a has been performed.

According to the above-described configuration, the detection unit 42 can perform a target object detection process while selecting the behavior a maximizing the behavior value function Q. The behavior value function Q is optimized as a result of repeatedly performing a plurality of trials through the above-described processes. The trials are automatically performed by the calculation unit 41, and thus it is possible to easily perform such a plurality of trials which cannot be artificially performed. Therefore, according to the present embodiment, a target object can be detected with high accuracy with a higher probability than in optical parameters which are artificially determined.

In the present embodiment, since the detection unit 42 is configured to detect a positional attitude of a target object, according to the present embodiment, it is possible to detect a positional attitude of a target object with high accuracy. According to the present embodiment, it is possible to calculate an imaging unit parameter which is an optical parameter on the basis of the optimized behavior value function Q. Therefore, it is possible to adjust the imaging unit 21 such that the detection accuracy of a target object is increased. According to the present embodiment, it is possible to calculate an illumination unit parameter which is an optical parameter on the basis of the optimized behavior value function Q. Therefore, it is possible to adjust the illumination unit 22 such that the detection accuracy of a target object is increased.

According to the present embodiment, it is possible to calculate an image processing parameter which is an optical parameter on the basis of the optimized behavior value function Q. Therefore, it is possible to perform image processing increasing the detection accuracy of a target object. According to the present embodiment, since the behavior value function Q is automatically optimized, it is possible to easily calculate an optical parameter for detecting a target object with high accuracy. Since the behavior value function Q is automatically optimized, it is also possible to automatically calculate an optimal optical parameter.

In the present embodiment, the learning portion 41b determines a behavior which changes an optical parameter on the basis of an image as a state variable, and optimizes the optical parameter. Therefore, it is possible to optimize an optical parameter on the basis of an image actually captured by the imaging unit 21 under an actual environment illuminated by the illumination unit 22. Therefore, an optical parameter can be optimized so as to correspond to use environments of the robots 1 and 2.

In the present embodiment, since a position of the imaging unit 21 and a position of the illumination unit 22 are included in a behavior, and the behavior value function Q is optimized on the basis of the behavior, it is possible to optimize the parameters 44a related to the position of the imaging unit 21 and the position of the illumination unit 22. Therefore, after learning, at least a relative positional relationship between the imaging unit 21 and the illumination unit 22 is idealized. If the target object W is placed at a fixed position or a substantially fixed position on the work table, positions of the imaging unit 21 and the illumination unit 22 in the robot coordinate system may be considered to be idealized after learning. In the present embodiment, an image captured by the imaging unit 21 is observed as a state. Therefore, according to the present embodiment, positions of the imaging unit 21 or positions of the illumination unit 22 corresponding to various image states are idealized.

(4-3) Learning of operation parameters

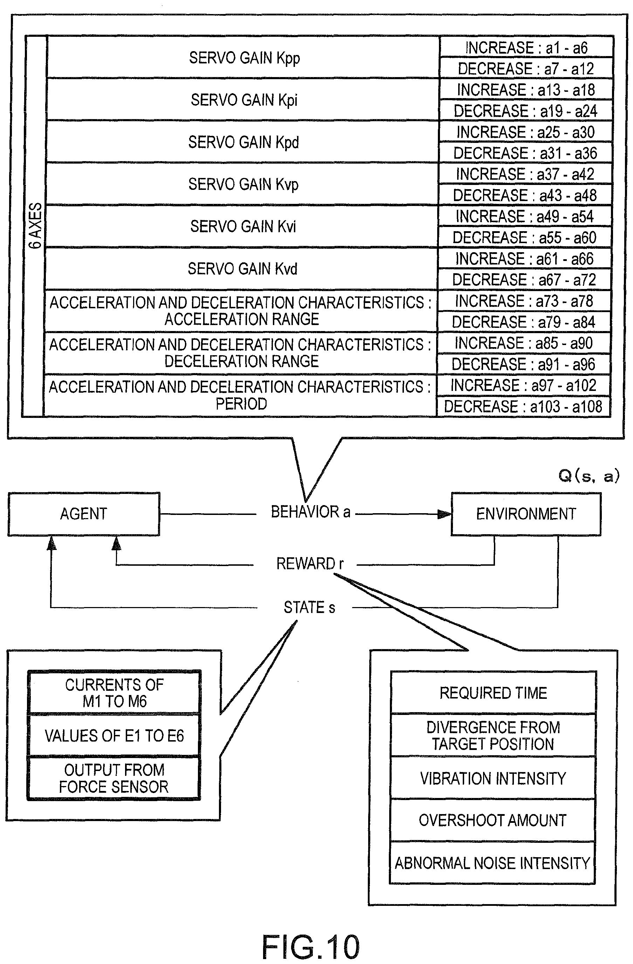

Also in learning of operation parameters, a learning target parameter can be selected, and, herein, an example thereof will be described. Fig. 10 is a diagram for explaining a learning example of operation parameters by using the same model as the model illustrated in Fig. 7. In this example, the behavior value function Q(s,a) is also optimized on the basis of Expression (2). Therefore, the behavior a maximizing the behavior value function Q(s,a) after being optimized is regarded as an optimal behavior, and the parameters 44a indicating the behavior a is regarded as optimized parameters.

Also regarding of learning of operation parameters, changing the operation parameters corresponds to determination of a behavior, and behavior information 44d indicating a learning target parameter and a behavior which can be taken is recorded in the storage unit 44 in advance. In other words, an operation parameter described as a learning target in the behavior information 44d is a learning target. In Fig. 10, servo gains and acceleration and deceleration characteristics of the operation parameters in the robot 3 are learning targets, and a start point and an end point of an operation are not learning targets. The start point and the end point of the operation are taught positions, and other positions are not taught in the present embodiment. Therefore, in the present embodiment, there is a configuration in which a taught position which is taught to the robot 3 is not included.

Specifically, the servo gains Kpp, Kpi, Kpd, Kvp, Kvi and Kvd of the operation parameters are defined for each of the motors M1 to M6, and can be changed for each of the six axes. Therefore, in the present embodiment, six servo gains per axis can be increased or decreased, and, a total of seventy-two behaviors (behaviors a1 to a72) including thirty-six behaviors for an increase and thirty-six behaviors for a decrease can be selected.

On the other hand, the acceleration and deceleration characteristics of the operation parameters are the characteristics as illustrated in Fig. 4, and are defined for each of the motors M1 to M6 (for the six axes). In the present embodiment, in the acceleration and deceleration characteristics, acceleration in an acceleration range, acceleration in a deceleration range, and a length ($t_4$ illustrated in Fig. 4) of a period in which a speed is higher than 0 may be changed. In the present embodiment, a curve in the acceleration range or the deceleration range is defined by a change in acceleration, for example, acceleration after changing indicates an inclination of the curve center, and the curve around the curve center changes according to a predefined rule. Of course, the acceleration and deceleration characteristics may be adjusted according to various methods.

In any case, in the present embodiment, the acceleration and deceleration characteristics can be adjusted by using three elements (the acceleration range, the deceleration range, and the period) per axis, and a numerical value (acceleration or a period length) corresponding to each element can be increased or decreased. Therefore, a total of thirty-six behaviors (behaviors a73 to a108) including eighteen behaviors for an increase and eighteen behaviors for a decrease can be selected. In the present embodiment, parameters corresponding to options of the behaviors predefined as mentioned above are described in the behavior information 44d as learning targets. Information (an ID of the behavior, a change amount in each behavior, or the like) for specifying each behavior is described in the behavior information 44d.

In the example illustrated in Fig. 10, a reward is evaluated on the basis of whether work is good or bad performed by the robot 3. In other words, the learning portion 41b changes the operation parameters corresponding the behavior a, and then operates the robot 3 according to the operation parameters, and the robot 3 performs work of picking up a target object detected by the detection unit 42. The learning portion 41b observes whether the work is good or bad so as to evaluate whether the work is good or bad. The learning portion 41b determines a reward for the behavior a, and the states s and s' on the basis of whether the work is good or bad.

Whether work is good or bad includes not only whether or not the work is successful (whether or not pickup is successful) but also the quality of work. Specifically, the learning portion 41b acquires a required time from the start of work to the finish thereof (from the start in step S110 until the finish is determined in step S125) on the basis of a clocking circuit (not illustrated). The learning portion 41b gives a positive reward (for example, +1) in a case where the required time for the work is shorter than a reference, and gives a negative reward (for example, -1) in a case where the required time for the work is longer than the reference. The reference may be specified according to various factors, may be, for example, a required time for the previous work, may be the shortest required time in the past, and may be a time set in advance.

In each step of work, the learning portion 41b converts outputs from the encoders E1 to E6 of the robot 3 on the basis of the correspondence relationship U1, so as to acquire a position of the gripper 23. The learning portion 41b acquires a deviation amount between a target position (end point) in each work and a position of the gripper 23 of when the work is finished, gives a positive reward in a case where the deviation amount between the target position and the position of the gripper 23 is smaller than a reference, and gives a negative reward in a case where the deviation amount is larger than the reference. The reference may be specified according to various factors, may be, for example, the previous deviation amount, may be the smallest deviation amount in the past, and may be a deviation amount set in advance.

The learning portion 41b acquires a position of the gripper 23 acquired in each step of the work over a predetermined period prior to setting, and acquires a vibration intensity in the period. The learning portion 41b gives a positive reward in a case where the extent of the vibration intensity is lower than a reference, and gives a negative reward in a case where the extent thereof is higher than the reference. The reference may be specified according to various factors, may be, for example, the extent of previous vibration intensity, may be the lowest extent of vibration intensity in the past, and may be the extent of vibration intensity set in advance. The extent of vibration intensity may be specified according to various methods, and various methods such as an integral value of divergence from a target position or a period in which vibration of a threshold value or more occurs may be employed. The predetermined period may be various periods, and, in a period from a start point of a step to an end point thereof, a reward based on vibration intensity during an operation is evaluated. If an end period of a step is the predetermined period, a reward based on the intensity of residual vibration is evaluated.

The learning portion 41b acquires a position of the gripper 23 acquired in an end period of each step of the work over a predetermined period prior to setting, and acquires the maximum value of divergence from a target position in the period as an overshoot amount. The learning portion 41b gives a positive reward in a case where the overshoot amount is smaller than a reference, and gives a negative reward in a case where the overshoot amount is larger than the reference. The reference may be specified according to various factors, may be, for example, the extent of previous overshoot amount, may be the smallest minimum overshoot amount in the past, and may be an overshoot amount set in advance.

In the present embodiment, a sound collecting device is attached to at least one of the control device 40, the robots 1 to 3, and the work table, and the learning portion 41b acquires information indicating sounds acquired by the sound collecting device during work. The learning portion 41b gives a positive reward in a case where the magnitude of sounds generated during the work is less than a reference, and gives a negative reward in a case where the magnitude thereof is more than the reference. The reference may be specified according to various factors, may be, for example, the extent of the magnitude of sounds generated in the previous work or step, may be the minimum value of the magnitude of generated sounds in the past, and may be magnitude set in advance. The magnitude of generated sounds may be evaluated by using the maximum value of sound pressure, and may be evaluated by using a statistical value (for example, an average value) in a predetermined period, and various configurations may be employed.

The next state s' in a case where the behavior a is employed in the current state s may be specified by operating the robot 3 after changing the parameters corresponding to the behavior a, and then by observing a state in the state observation portion 41a. Learning of the operation parameters in this example is performed on the robot 3 after detection of the target object is completed by the robots 1 and 2.

In the example illustrated in Fig. 10, state variables include currents of the motors M1 to M6, values of the encoders E1 to E6, and an output from the force sensor P. Therefore, the state observation portion 41a can observe values of currents supplied to the motors M1 to M6 as a control result of the servo 43d. The current values correspond to torques output from the motors M1 to M6. An output from each of the encoders E1 to E6 is converted into a position of the TCP in the robot coordinate system on the basis of the correspondence relationship U1. Therefore, the state observation portion 41a observes position information of the gripper 23 of the robot 3.

An output from the force sensor P may be converted into a position of the robot by integrating the output. In other words, the state observation portion 41a acquires a position of the TCP by integrating an acting force on the TCP in the robot coordinate system on the basis of the correspondence relationship U2. Therefore, in the present embodiment, the state observation portion 41a observes position information of the gripper 23 of the robot 3 by also using the output from the force sensor P. A state may be observed according to various methods, and a value (a current value or an output value of the encoder or the force sensor) having not undergone the conversion may be observed as a state.

The state observation portion 41a observes changes obtained in the robot 3 as currents of the motors M1 to M6, values of the encoders E1 to E6, and an output from the force sensor P as a result of the adjustment, instead of directly observing adjustment results of the servo gains or the acceleration and deceleration characteristics which are behaviors. Therefore, the influence of the behaviors is indirectly observed, and, in this meaning, a state variable of the present embodiment is a state variable of which a change is hard to directly estimate on the basis of changes in the operation parameters.

The currents of the motors M1 to M6, the values of the encoders E1 to E6, and the output from the force sensor P directly indicate operations of the robot 3, and the operations directly indicate whether work is good or bad. Therefore, by observing the currents of the motors M1 to M6, the values of the encoders E1 to E6, and the output from the force sensor P as state variables, a parameter which is hard to artificially improve can be improved, and thus an operation parameter can be optimized such that the quality of work is effectively increased. As a result, it is possible to calculate, with high probability, operation parameters giving a higher performance operation than operation parameters which are artificially determined.

(4-4) Learning example of operation parameters

Next, a description will be made of a learning example of operation parameters. Information indicating a variable or a function which is referred to in the process of learning is stored in the storage unit 44 as learning information 44e. In other words, the calculation unit 41 has a configuration of causing the behavior value function Q(s,a) to converge by repeating observation of a state variable, determination of a behavior corresponding to the state variable, and evaluation of a reward obtained through the behavior. Therefore, in this example, time-series values of the state variable, the behavior, and the reward are sequentially recorded in the learning information 44e in the process of learning.

In the present embodiment, learning of operation parameters is performed in the position control mode. In order to perform learning in the position control mode, work formed of only the position control mode may be generated as the robot program 44b of the robot 3, and learning may be performed by using only the position control mode in a situation in which work including any modes is generated as the robot program 44b of the robot 3.

The behavior value function Q(s, a) may be calculated according to various methods, and may be calculated on the basis of many trials, but, herein, a description will be made of an example of optimizing the behavior value function Q by using the DQN. A multilayer neural network used for optimization of the behavior value function Q is schematically illustrated in Fig. 8 described above. In this example in which states as illustrated in Fig. 10 are observed, currents of the motors M1 to M6, values of the encoders E1 to E6, and an output (an output on each of the six axes) from the force sensor P in the robot 3 are states, and thus the number M of states s is eighteen. In this example in which the behaviors illustrated in Fig. 10 can be selected, 108 behaviors can be selected, and thus N is 108. Of course, the content or the number (a value of N) of behaviors a or the content or the number (a value of M) of states s may be changed depending on the trial number t.

Also in the present embodiment, parameters (information required to obtain an output from an input) for specifying the multilayer neural network are recorded in the storage unit 44 as the learning information 44e. Herein, a parameter of the multilayer neural network which is variable in the process of learning is also indicated by $\theta$. The above behavior value functions $Q(s_t,a_{1t})$ to $Q(s_t,a_{Nt})$ may also be expressed as $Q(s_t,a_{1t}; \theta_t)$ to $Q(s_t,a_{Nt}; \theta_t)$ by using the parameter $\theta$.

Next, a description will be made of an order of learning processes with reference to a flowchart shown in Fig. 9. A learning process for an operation parameter may be performed during an operation of the robot 3, and the learning process may be performed in advance prior to actual operations. Herein, a description will be made of the learning process according to a configuration in which the learning process is performed in advance prior to actual operations (if a configuration in which the parameter $\theta$ indicating the multilayer neural network is optimized, the information is preserved, and is used for the next and subsequent operations).

If the learning process is started, the calculation unit 41 initializes the learning information 44e (step S200). In other words, the calculation unit 41 specifies an initial value of the parameter $\theta$ which is referred to when learning is started. The initial value may be determined according to various methods, and, in a case where learning was not performed in the past, any value or a random value may be used as an initial value of the parameter $\theta$, and a simulation environment for simulating the robot 3 or a target object may be prepared, and the parameter $\theta$ learned or estimated on the basis of the environment may be used as an initial value.

In a case where learning was performed in the past, the learned parameter $\theta$ is used as an initial value. In a case where a similar target was learned in the past, the parameter $\theta$ in the learning may be used as an initial value. The past learning may be performed by a user by using the robot 3, and may be performed by a manufacturer of the robot 3 before the robot 3 are sold. In this case, there may be a configuration in which a manufacturer prepares a plurality of initial value sets according to types of target objects or work, and a user selects an initial value during learning. In a case where an initial value of the parameter $\theta$ is determined, the initial value is stored in the learning information 44e as the current value of the parameter $\theta$.

Next, the calculation unit 41 initializes a parameter (step S205). Herein, since an operation parameter is a learning target, the calculation unit 41 initializes an operation parameter. In other words, in a state in which learning was not performed, the calculation unit 41 sets an operation parameter included in the parameters 44a generated through teaching as an initial value. In a state in which certain learning was performed in the past, the calculation unit 41 sets an operation parameter included in the parameters 44a used last during the learning, as an initial value.

Next, the state observation portion 41a observes a state variable (step S210). In other words, the control unit 43 controls the robot 3 by referring to the parameters 44a and the robot program 44b (corresponding to the above steps S110 to S130). Thereafter, the state observation portion 41a observes values of currents supplied to the motors M1 to M6. The state observation portion 41a acquires outputs from the encoders E1 to E6, and converts the outputs into a position of the TCP in the robot coordinate system on the basis of the correspondence relationship U1. The state observation portion 41a acquires a position of the TCP by integrating an output from the force sensor P.

Next, the learning portion 41b calculates a behavior value (step S215). In other words, the learning portion 41b refers to the learning information 44e so as to acquire the parameter $\theta$, inputs the latest state variable to the multilayer neural network indicated by the learning information 44e, and calculates N behavior value functions $Q(s_t,a_{1t};\theta_t)$ to $Q(s_t, a_{Nt}; \theta_t)$.

The latest state variable is an observation result in step S210 in the first execution, and is an observation result in step S225 in the second and subsequent executions. The trial number t is 0 in the first execution, and is a value of 1 or greater in the second and subsequent executions. In a case where the learning process was not performed in the past, the parameter $\theta$ indicated by the learning information 44e is not optimized, and may thus be an inaccurate value as a value of the behavior value function Q, but the behavior value function Q is gradually optimized by repeatedly performing the processes in step S215 and the subsequent steps. In a case where the processes in step S215 and the subsequent steps are repeatedly performed, the state s, the behavior a, and the reward r are stored in the storage unit 44 in correlation with each trial number t, and may be referred to at any timing.

Next, the learning portion 41b selects and performs a behavior (step S220). In the present embodiment, a process is performed in which the behavior a maximizing the behavior value function Q(s,a) is regarded as an optimal behavior. Therefore, the learning portion 41b specifies the maximum value among values of the N behavior value functions $Q(s_t,a_{1t}; \theta_t)$ to $Q(s_t,a_{Nt}; \theta_t)$ calculated in step S215. The learning portion 41b selects a behavior giving the maximum value. For example, if $Q(s_t,a_{Nt}; \theta_t)$ is the maximum value among the N behavior value functions $Q(s_t, a_{1t}; \theta_t)$

to $Q(s_t,a_{Nt}; \theta_t)$, the learning portion 41b selects the behavior $a_{Nt}$.

If the behavior is selected, the learning portion 41b changes the parameters 44a corresponding to the behavior. For example, in the example illustrated in Fig. 10, in a case where the behavior a1 increasing the servo gain Kpp of the motor M1 by a predetermined value is selected, the learning portion 41b increases a value of the servo gain Kpp of the motor M1 indicated by the operation parameter by the predetermined value . In a case where the parameters 44a are changed, the control unit 43 controls the robot 3 by referring to the parameters 44a, so as to perform a series of work. In the present embodiment, a series of work is performed whenever a behavior is selected, but some of the series of work may be performed whenever a behavior is selected (at least one of a plurality of steps forming a series of work may be performed).

Next, the state observation portion 41a observes a state variable (step S225). In other words, the state observation portion 41a performs the same process as in the observation of a state variable in step S210, and acquires, as state variables, values of currents supplied to the motors M1 to M6, a position of the TCP specified on the basis of outputs from the encoders E1 to E6, and a position of the TCP specified on the basis of an output from the force sensor P. In a case where the current trial number is t (in a case where a selected behavior is $a_t$), the state s acquired in step S225 is a state $S_{t+1}$.

Next, the learning portion 41b evaluates a reward (step S230) . In other words, the learning portion 41b acquires a required time from the start of work to the finish thereof on the basis of a clocking circuit (not illustrated), acquires a positive reward in a case where the required time for the work is shorter than a reference, and acquires a negative reward in a case where the required time for the work is longer than the reference. The learning portion 41b acquires a position of the gripper 23 in a finish stage of each step of the work, and acquires a deviation amount with a target position in each step. The learning portion 41b acquires a positive reward in a case where the deviation amount between the target position and the position of the gripper 23 is smaller than a reference, and acquires a negative reward in a case where the deviation amount is larger than the reference. In a case where a series of work is formed of a plurality of steps, a sum of rewards in the steps may be acquired, and a statistical value (for example, an average value) may be acquired.

The learning portion 41b acquires a vibration intensity on the basis of a position of the gripper 23 acquired in each step of the work. The learning portion 41b acquires a positive reward in a case where the extent of the vibration intensity is lower than a reference, and acquires a negative reward in a case where the extent thereof is higher than the reference. In a case where a series of work is formed of a plurality of steps, a sum of rewards in the steps may be acquired, and a statistical value (for example, an average value) may be acquired.

The learning portion 41b acquires an overshoot amount on the basis of a position of the gripper 23 acquired in an end period of each step of the work. The learning portion 41b acquires a positive reward in a case where the overshoot amount is smaller than a reference, and acquires a negative reward in a case where the overshoot amount is larger than the reference. In a case where such a series of work is formed of a plurality of steps, a sum of rewards in the steps may be acquired, and a statistical value (for example, an average value) may be acquired.

The learning portion 41b acquires information indicating sounds acquired by the sound collecting device during the work. The learning portion 41b acquires a positive reward in a case where the magnitude of sounds generated during the work is less than a reference, and acquires a negative reward in a case where the magnitude thereof is more than the reference. In a case where the current trial number is t, the reward r acquired in step S230 is a reward $r_{t+1}$.

The present embodiment is aimed to update the behavior value function Q shown in Expression (2), but, in order to appropriately update the behavior value function Q, the multilayer neural network indicating the behavior value function Q is required to be optimized ($\theta$ is required to be optimized). In order to appropriately output the behavior value function Q by using the multilayer neural network illustrated in Fig. 8, teacher data which is a target of the output is necessary. The multilayer neural network is expected to be optimized by improving the parameter $\theta$ such that an error between an output from the multilayer neural network and a target is minimized.

However, in the present embodiment, in a stage in which learning is not completed, there are no findings of the behavior value function Q, and it is hard to specify a target. Therefore, in the present embodiment, the parameter $\theta$ indicating the multilayer neural network is improved by using an objective function minimizing the second term of Expression (2), that is, a so-called TD error. In other words, $(r_{t+1}+\gamma \max_{a'}Q(s_{t+1},a' ; \theta_t))$ is used as a target, and the parameter $\theta$ is learned such that an error between the target and $Q(s_t,a_t; \theta_t)$ is minimized. However, since the target $(r_{t+1}+\gamma \max_{a'}Q(s_{t+1},a' ; \theta_t))$ includes the parameter $\theta$ as a learning target, in the present embodiment, a target is fixed (to, for example, the parameter $\theta$ learned last (an initial value of $\theta$ in first learning)) over some trials. In the present embodiment, the number of trials over which a target is fixed is predefined.

Since learning is performed on the premise, if the reward is evaluated in step S230, the learning portion 41b calculates an objective function (step S235) . In other words, the learning portion 41b calculates an objective function (for example, a function which is proportion to an expected value of the square of a TD error or a sum total of the squared TD errors) for evaluating a TD error in each trial. Since the TD error is calculated in a state in which a target is fixed, if the fixed target is expressed as $(r_{t+1}+\gamma \max_{a'}Q(s_{t+1},a' ; \theta_-))$, the TD error is expressed as $(r_{t+1}+\gamma \max_{a'}Q(s_{t+1},a'; \theta_-)) - Q(s_t,$

$a_t$; $\theta_t$). In the equation of the TD error, the reward $r_{t+1}$ is a reward obtained in step S230 due to the behavior $a_t$.

$\max_{a'}Q(s_{t+1},a'\ ;\ \theta_-)$ is the maximum value among outputs obtained in a case where the state $s_{t+1}$ calculated in step S225 due to the behavior $a_t$ is input to a multilayer neural network specified by the fixed parameter $\theta_-$. $Q(s_t,a_t;\ \theta_t)$ is a value of an output corresponding to the behavior $a_t$ among outputs obtained in a case where the state $s_t$ before the behavior $a_t$ is selected is input to a multilayer neural network specified by the parameter $\theta_t$ in the stage at the trial number t.

In a case where the objective function is calculated, the learning portion 41b determines whether or not learning is finished (step S240). In the present embodiment, a threshold value for determining whether or not a TD error is sufficiently small is predefined, and, in a case where the objective function is equal to or less than the threshold value, the learning portion 41b determines that learning is finished.

In a case where it is determined that learning is not finished in step S240, the learning portion 41b updates a behavior value (step S245). In other words, the learning portion 41b specifies a change in the parameter θ for reducing the objective function on the basis of a partial differential using the parameter θ of the TD error, and changes the parameter θ. Of course, herein, the parameter θ may be changed according to various methods, and, for example, a method of gradient decent such as RMSProp may be employed. Adjustment using a learning ratio may be performed as appropriate. According to the above-described processes, the parameter θ can be changed such that the behavior value function Q comes close to a target.

However, in the present embodiment, since a target is fixed as described above, the learning portion 41b further determines whether or not the target is updated. Specifically, the learning portion 41b determines whether or not trials of a predefined number have been performed (step S250), and, in a case where it is determined that the trials of a predefined number have been performed in step S250, the learning portion 41b updates the target (step S255). In other words, the learning portion 41b updates the parameter θ referred to when calculating the target to the latest parameter θ. Thereafter, the learning portion 41b repeatedly performs the processes in step S215 and the subsequent steps. On the other hand, in a case where it is determined that the trials of a predefined number have not been performed in step S250, the learning portion 41b skips the step S255, and repeatedly performs the processes in step S215 and the subsequent steps.

In a case where it is determined that learning is finished in step S240, the learning portion 41b updates the learning information 44e (step S260). In other words, the learning portion 41b records the parameter θ obtained through learning in the learning information 44e as the parameter θ which is to be referred to during work performed by the robot 3. In a case where the learning information 44e including the parameter θ is recorded, the control unit 43 controls the robot 3 on the basis of the parameters 44a when the robot 3 performs work as in steps S110 to S130. Observation of the current state in the state observation portion 41a and selection of a behavior in the learning portion 41b are repeatedly performed in the process of the work. Of course, in this case, the learning portion 41b selects the behavior a giving the maximum value among the outputs Q(s,a) calculated with the state as an input. In a case where the behavior a is selected, the parameters 44a are updated to be values corresponding to a state in which the behavior a has been performed.

According to the above-described configuration, the control unit 43 can perform work while selecting the behavior a maximizing the behavior value function Q. The behavior value function Q is optimized as a result of repeatedly performing a plurality of trials through the above-described processes. The trials are automatically performed by the calculation unit 41, and thus it is possible to easily perform such a plurality of trials which cannot be artificially performed. Therefore, according to the present embodiment, it is possible to increase the quality of work performed by the robot 3 with a higher probability than in operation parameters which are artificially determined.

In the present embodiment, the servo gains as the parameters 44a are changed due to a behavior. Therefore, it is possible to automatically adjust the servo gains which are hard to appropriately set through artificial adjustment and are used to control the motors. In the present embodiment, the acceleration and deceleration characteristics as the parameters 44a are changed due to a behavior. Therefore, it is possible to automatically adjust the acceleration and deceleration characteristics which are hard to appropriately set through artificial adjustment.

In the present embodiment, a start point and an end point of an operation of the robot are not changed due to a behavior. Therefore, in the present embodiment, it is possible to prevent the robot 3 from being deviated from a scheduled start point and end point and thus from performing an operation unintended by a user. In the present embodiment, a start point and an end point which are positions taught to the robot are not changed due to a behavior. Therefore, in the present embodiment, it is possible to prevent the robot 3 from being deviated from the taught positions and thus from performing an operation unintended by a user. In the present embodiment, the taught positions are a start point and an end point, but other positions may be used as taught positions. For example, in a case where there is a position required to pass between a start point and an end point, or an attitude required to be taken, the position or the attitude may be set as a taught position or a taught attitude.

In the present embodiment, a reward for a behavior is evaluated on the basis of whether or not work performed by the robot 3 is good or bad, and thus a parameter can be optimized such that the work of the robot 3 is successful. In the present embodiment, since a reward is evaluated to be positive in a case where a required time for work is shorter than a reference, it is possible to easily calculate an operation parameter for causing the robot 3 to perform work in a short period of time. In the present embodiment, since a reward is evaluated to be positive in a case where a deviation amount between a position of the robot 3 and a target position is smaller than a reference, it is possible to easily calculate an operation parameter for accurately moving the robot 3 to the target position.

In the present embodiment, since a reward is evaluated to be positive in a case where a vibration intensity is lower than a reference, it is possible to easily calculate an operation parameter causing a low probability that vibration may be generated due to an operation of the robot 3. In the present embodiment, since a reward is evaluated to be positive in a case where an overshoot amount of a position of the robot 3 is smaller than a reference, it is possible to easily calculate an operation parameter causing a low probability that the robot 3 may overshoot. In the present embodiment, since a reward is evaluated to be positive in a case where a level of generated sounds is lower than a reference, it is possible to easily calculate an operation parameter causing a low probability that abnormality may occur in the robot 3.

According to the present embodiment, since the behavior value function Q is automatically optimized, it is possible to easily calculate an operation parameter for performing a high performance operation. Since the behavior value function Q is automatically optimized, it is also possible to automatically calculate an optimal operation parameter.

In the present embodiment, since position information of the robot 3 is acquired by using the force sensor P which is generally used for the robot 3, it is possible for the robot 3 to calculate position information on the basis of the generally used sensor.

In the present embodiment, the learning portion 41b actually measures an operation result of the robot 3 as a state variable, and optimizes an operation parameter. Therefore, it is possible to optimize an operation parameter in accordance with an actual environment in which the robot 3 performs work. Therefore, an operation parameter can be optimized so as to correspond to a use environment of the robot 3.

In the present embodiment, the state observation portion 41a observes a state variable in a state in which the gripper 23 as an end effector is attached to the robot 3. The learning portion 41b changes the parameters 44a corresponding to a behavior in a state in which the gripper 23 as an end effector is attached to the robot 3. According to this configuration, it is possible to easily calculate an operation parameter suitable for the robot 3 performing an operation using the gripper 23 as an end effector.

In the present embodiment, the state observation portion 41a observes a state variable in a state in which the gripper 23 as an end effector grips a target object. In the present embodiment, the learning portion 41b changes the parameters 44a corresponding to a behavior in a state in which the gripper 23 as an end effector grips a target object. According to this configuration, it is possible to easily calculate an operation parameter suitable for the robot 3 performing an operation by causing the gripper 23 as an end effector to grip a target object.

(4-5) Learning of force control parameters

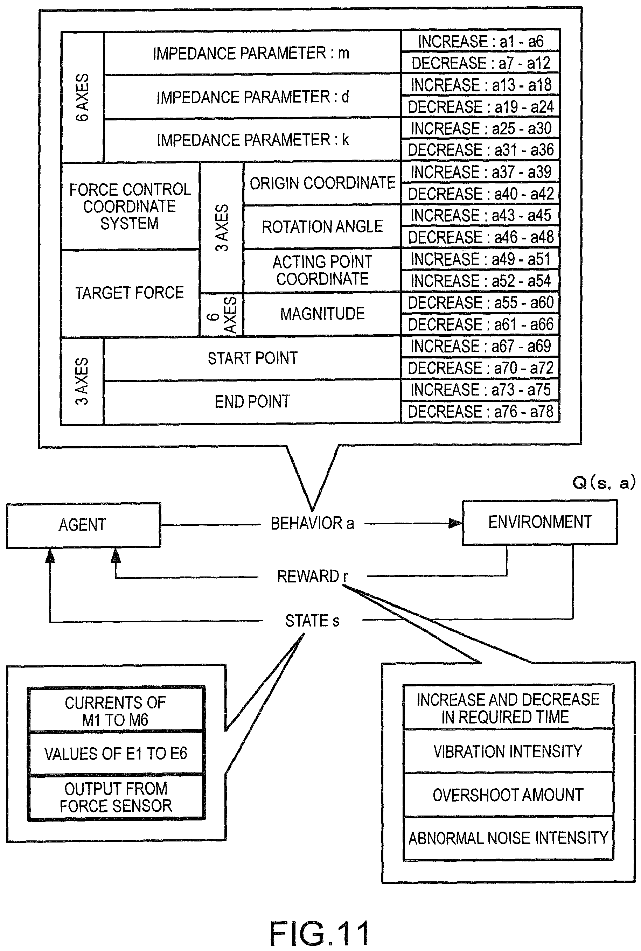

Also in learning of force control parameters, a learning target parameter can be selected, and, herein, an example thereof will be described. Fig. 11 is a diagram for explaining a learning example of force control parameters by using the same model as the model illustrated in Fig. 7. In this example, the behavior value function Q(s,a) is also optimized on the basis of Expression (2). Therefore, the behavior a maximizing the behavior value function Q(s,a) after being optimized is regarded as an optimal behavior, and the parameters 44a indicating the behavior a is regarded as optimized parameters.

Also regarding of learning of force control parameters, changing the force control parameters corresponds to determination of a behavior, and behavior information 44d indicating a learning target parameter and a behavior which can be taken is recorded in the storage unit 44 in advance. In other words, a force control parameter described as a learning target in the behavior information 44d is a learning target. In Fig. 11, impedance parameters, the force control coordinate system, a target force, an a start point and an end point of an operation of the robot 3 of the force control parameters in the robot 3 are learning targets. A start point and an end point of an operation in force control are taught positions, but may be changed through learning of the force control parameters. The origin of the force control coordinate system is an offset point from the tool center point (TCP) of the robot 3, and is an acting point on which a target force acts before learning. Therefore, if the force control coordinate system (an origin coordinate and an axial rotation angle) are changed, a position of the offset point from the TCP is changed, and thus an acting point of the target force may not be the origin of the force control coordinate system.

The impedance parameters m, k and d of the force control parameters are defined for translation and rotation with respect to each axis of the robot coordinate system. Therefore, in the present embodiment, each of the three impedance parameters m, d and k per axis can be increased or decreased, and a total of thirty-six behaviors (behaviors a1 to a36) including eighteen behaviors for an increase and eighteen behaviors for a decrease can be selected.

On the other hand, the force control coordinate system is defined by expressing an origin coordinate of the coordinate system and a rotation angle of the axis of the force control coordinate system with the robot coordinate system as a reference. Therefore, in the present embodiment, increase and decrease of the origin coordinate in three axis directions are possible, and increase and decrease of an axial rotation angle about the three axes are possible. Three behaviors for an increase of the origin coordinate, three behaviors for a decrease thereof, three behaviors for an increase of the axial rotation angle, three behaviors for a decrease thereof are possible, and thus a total of twelve behaviors (a37 to a48) can be selected. The target force is expressed by a target force vector, and is defined by an acting point of the target force, and the magnitude of each of six-axis components (translational forces on the three axes and torques on the three axes) of the force control coordinate system. Therefore, in the present embodiment, six behaviors for increase and decrease of an acting point of the target force in the three-axis directions, six behaviors for increases of the respective six components, and six behaviors for decreases thereof are possible, and thus a total of eighteen behaviors (behaviors a49 to a66) can be selected.

A start point and an end point of an operation of the robot 3 can be increased and decreased along each axis direction of the robot coordinate system, and a total of twelve behaviors (behaviors a67 to a78) including six behaviors for increase and decrease of the start point and six behaviors for increase and decrease of the end point can be selected. In the present embodiment, parameters corresponding to options of the behaviors predefined as mentioned above are described in the behavior information 44d as learning targets. Information (an ID of the behavior, a change amount in each behavior, or the like) for specifying each behavior is described in the behavior information 44d.

In the example illustrated in Fig. 11, a reward is evaluated on the basis of whether work is good or bad performed by the robot 3. In other words, the learning portion 41b changes the force control parameters corresponding the behavior a, and then operates the robot 3 according to the force control parameters, and the robot 3 performs work of picking up a target object detected by the detection unit 42. The learning portion 41b observes whether the work is good or bad so as to evaluate whether the work is good or bad. The learning portion 41b determines a reward for the behavior a, and the states s and s' on the basis of whether the work is good or bad.

Whether work is good or bad includes not only whether or not the work is successful (whether or not pickup is successful) but also the quality of work. Specifically, the learning portion 41b acquires a required time from the start of work to the finish thereof (from the start in step S110 until the finish is determined in step S125) on the basis of a clocking circuit (not illustrated). The learning portion 41b gives a positive reward (for example, +1) in a case where the required time for the work is shorter than a reference, and gives a negative reward (for example, -1) in a case where the required time for the work is longer than the reference. The reference may be specified according to various factors, may be, for example, a required time for the previous work, may be the shortest required time in the past, and may be a time set in advance.

In each step of work, the learning portion 41b converts outputs from the encoders E1 to E6 of the robot 3 on the basis of the correspondence relationship U1, so as to acquire a position of the gripper 23. The learning portion 41b acquires a position of the gripper 23 acquired in each step of the work over a predetermined period prior to setting, and acquires a vibration intensity in the period. The learning portion 41b gives a positive reward in a case where the extent of the vibration intensity is lower than a reference, and gives a negative reward in a case where the extent thereof is higher than the reference. The reference may be specified according to various factors, may be, for example, the extent of previous vibration intensity, may be the lowest extent of vibration intensity in the past, and may be the extent of vibration intensity set in advance.

The extent of vibration intensity may be specified according to various methods, and various methods such as an integral value of divergence from a target position or a period in which vibration of a threshold value or more occurs may be employed. The predetermined period may be various periods, and, in a period from a start point of a step to an end point thereof, a reward based on vibration intensity during an operation is evaluated. If an end period of a step is the predetermined period, a reward based on the intensity of residual vibration is evaluated. In the force control, there are many cases where a reward based on the former vibration intensity is important. If a reward based on the former vibration intensity is important, a reward based on the intensity of residual vibration may not be evaluated.

The learning portion 41b acquires a position of the gripper 23 acquired in an end period of each step of the work over a predetermined period prior to setting, and acquires the maximum value of divergence from a target position in the period as an overshoot amount. The learning portion 41b gives a positive reward in a case where the overshoot amount is smaller than a reference, and gives a negative reward in a case where the overshoot amount is larger than the reference. The reference may be specified according to various factors, may be, for example, the extent of previous overshoot amount, may be the smallest minimum overshoot amount in the past, and may be an overshoot amount set in advance.

In the present embodiment, a sound collecting device is attached to at least one of the control device 40, the robots 1 to 3, and the work table, and the learning portion 41b acquires information indicating sounds acquired by the sound collecting device during work. The learning portion 41b gives a positive reward in a case where the magnitude of sounds generated during the work is less than a reference, and gives a negative reward in a case where the magnitude thereof is more than the reference. The reference may be specified according to various factors, may be, for example, the extent of the magnitude of sounds generated in the previous work or step, may be the minimum value of the magnitude of generated sounds in the past, and may be magnitude set in advance. The magnitude of generated sounds may be evaluated by using the maximum value of sound pressure, and may be evaluated by using a statistical value (for example, an average value) in a predetermined period, and various configurations may be employed.

In learning of the force control parameters, divergence which is a reward in learning of operation parameters is not included in a reward from a target position. In other words, in learning of the force control parameters, the divergence is not included in a reward since a start point or an end point of a step is changed according to the learning.

The next state s' in a case where the behavior a is employed in the current state s may be specified by operating the robot 3 after changing the parameters corresponding to the behavior a, and then by observing a state in the state observation portion 41a. Learning of the force control parameters in this example is performed on the robot 3 after detection of the target object is completed by the robots 1 and 2.

In the example illustrated in Fig. 11, state variables include currents of the motors M1 to M6, values of the encoders E1 to E6, and an output from the force sensor P. Therefore, the state observation portion 41a can observe values of currents supplied to the motors M1 to M6 as a control result of the servo 43d. The current values correspond to torques output from the motors M1 to M6. An output from each of the encoders E1 to E6 is converted into a position of the TCP in the robot coordinate system on the basis of the correspondence relationship U1. Therefore, the state observation portion 41a observes position information of the gripper 23 of the robot 3.

In the present embodiment, a position of the robot may be calculated by integrating outputs detected by the force sensor P during movement of the robot. In other words, the state observation portion 41a acquires a position of the TCP during movement by integrating an acting force on the TCP in the robot coordinate system on the basis of the correspondence relationship U2. Therefore, in the present embodiment, the state observation portion 41a observes position information of the gripper 23 of the robot 3 by also using the output from the force sensor P. A state may be observed according to various methods, and a value (a current value or an output value of the encoder or the force sensor) having not undergone the conversion may be observed as a state.

The state observation portion 41a observes changes obtained in the robot 3 as currents of the motors M1 to M6, values of the encoders E1 to E6, and an output from the force sensor P as a result of the adjustment, instead of directly observing adjustment results of the impedance parameters, the force control coordinate system, and the start point and the end point of a step which are behaviors. Therefore, the influence of the behaviors is indirectly observed, and, in this meaning, a state variable of the present embodiment is a state variable of which a change is hard to directly estimate on the basis of changes in the force control parameters.

The currents of the motors M1 to M6, the values of the encoders E1 to E6, and the output from the force sensor P directly indicate operations of the robot 3, and the operations directly indicate whether work is good or bad. Therefore, by observing the currents of the motors M1 to M6, the values of the encoders E1 to E6, and the output from the force sensor P as state variables, a parameter which is hard to artificially improve can be improved, and thus an force control parameter can be optimized such that the quality of work is effectively increased. As a result, it is possible to calculate, with high probability, force control parameters giving a higher performance operation than force control parameters which are artificially determined.

(4-6) Learning example of force control parameters

Next, a description will be made of a learning example of force control parameters. Information indicating a variable or a function which is referred to in the process of learning is stored in the storage unit 44 as learning information 44e. In other words, the calculation unit 41 has a configuration of causing the behavior value function Q(s,a) to converge by repeating observation of a state variable, determination of a behavior corresponding to the state variable, and evaluation of a reward obtained through the behavior. Therefore, in this example, time-series values of the state variable, the behavior, and the reward are sequentially recorded in the learning information 44e in the process of learning.

In the present embodiment, learning of force control parameters is performed in the force control mode (learning of force control parameters is not performed in the position control mode in which only position control is performed). In order to perform learning in the force control mode, work formed of only the force control mode may be generated as the robot program 44b of the robot 3, and learning may be performed by using only the force control mode in a situation in which work including any modes is generated as the robot program 44b of the robot 3.

The behavior value function Q(s,a) may be calculated according to various methods, and may be calculated on the basis of many trials, but, herein, a description will be made of an example of optimizing the behavior value function Q by using the DQN. A multilayer neural network used for optimization of the behavior value function Q is schematically illustrated in Fig. 8 described above. In this example in which states as illustrated in Fig. 11 are observed, currents of the motors M1 to M6, values of the encoders E1 to E6, and an output (an output on each of the six axes) from the force sensor P in the robot 3 are states, and thus the number M of states s is eighteen. In this example in which the behaviors illustrated in Fig. 11 can be selected, 78 behaviors can be selected, and thus N is 78. Of course, the content or the number (a value of N) of behaviors a or the content or the number (a value of M) of states s may be changed depending on the trial number t.

Also in the present embodiment, parameters (information required to obtain an output from an input) for specifying the multilayer neural network are recorded in the storage unit 44 as the learning information 44e. Herein, a parameter of the multilayer neural network which is variable in the process of learning is also indicated by $\theta$. The above behavior value functions $Q(s_t,a_{1t})$ to $Q(s_t,a_{Nt})$ may also be expressed as $Q(s_t,a_{1t}; \theta_t)$ to $Q(s_t,a_{Nt}; \theta_t)$ by using the parameter $\theta$.

Next, a description will be made of an order of learning processes with reference to a flowchart shown in Fig. 9. A learning process for a force control parameter may be performed during an operation of the robot 3, and the learning process may be performed in advance prior to actual operations. Herein, a description will be made of the learning process according to a configuration in which the learning process is performed in advance prior to actual operations (if a configuration in which the parameter $\theta$ indicating the multilayer neural network is optimized, the information is preserved, and is used for the next and subsequent operations).

If the learning process is started, the calculation unit 41 initializes the learning information 44e (step S200). In other words, the calculation unit 41 specifies an initial value of the parameter $\theta$ which is referred to when learning is started. The initial value may be determined according to various methods, and, in a case where learning was not performed in the past, any value or a random value may be used as an initial value of the parameter $\theta$, and a simulation environment for simulating the robot 3 or a target object may be prepared, and the parameter $\theta$ learned or estimated on the basis of the environment may be used as an initial value.

In a case where learning was performed in the past, the learned parameter $\theta$ is used as an initial value. In a case where a similar target was learned in the past, the parameter $\theta$ in the learning may be used as an initial value. The past learning may be performed by a user by using the robot 3, and may be performed by a manufacturer of the robot 3 before the robot 3 are sold. In this case, there may be a configuration in which a manufacturer prepares a plurality of initial value sets according to types of target objects or work, and a user selects an initial value during learning. In a case where an initial value of the parameter $\theta$ is determined, the initial value is stored in the learning information 44e as the current value of the parameter $\theta$.

Next, the calculation unit 41 initializes a parameter (step S205). Herein, since a force control parameter is a learning target, the calculation unit 41 initializes a force control parameter. In other words, in a state in which learning was not performed, the calculation unit 41 sets a force control parameter included in the parameters 44a generated through teaching as an initial value. In a state in which certain learning was performed in the past, the calculation unit 41 sets a force control parameter included in the parameters 44a used last during the learning, as an initial value.

Next, the state observation portion 41a observes a state variable (step S210). In other words, the control unit 43 controls the robot 3 by referring to the parameters 44a and the robot program 44b (corresponding to the above steps S110 to S130). Thereafter, the state observation portion 41a observes values of currents supplied to the motors M1 to M6. The state observation portion 41a acquires outputs from the encoders E1 to E6, and converts the outputs into a position of the TCP in the robot coordinate system on the basis of the correspondence relationship U1. The state observation portion 41a acquires a position of the TCP by integrating an output from the force sensor P.

Next, the learning portion 41b calculates a behavior value (step S215). In other words, the learning portion 41b refers to the learning information 44e so as to acquire the parameter $\theta$, inputs the latest state variable to the multilayer neural network indicated by the learning information 44e, and calculates N behavior value functions $Q(s_t,a_{1t}; \theta_t)$ to $Q(s_t, a_{Nt}; \theta_t)$.

The latest state variable is an observation result in step S210 in the first execution, and is an observation result in step S225 in the second and subsequent executions. The trial number t is 0 in the first execution, and is a value of 1 or greater in the second and subsequent executions. In a case where the learning process was not performed in the past, the parameter $\theta$ indicated by the learning information 44e is not optimized, and may thus be an inaccurate value as a value of the behavior value function Q, but the behavior value function Q is gradually optimized by repeatedly performing the processes in step S215 and the subsequent steps. In a case where the processes in step S215 and the subsequent steps are repeatedly performed, the state s, the behavior a, and the reward r are stored in the storage unit 44 in correlation with each trial number t, and may be referred to at any timing.

Next, the learning portion 41b selects and performs a behavior (step S220). In the present embodiment, a process is performed in which the behavior a maximizing the behavior value function Q(s,a) is regarded as an optimal behavior. Therefore, the learning portion 41b specifies the maximum value among values of the N behavior value functions $Q(s_t,a_{1t}; \theta_t)$ to $Q(s_t,a_{Nt}; \theta_t)$ calculated in step S215. The learning portion 41b selects a behavior giving the maximum value. For example, if $Q(s_t,a_{Nt}; \theta_t)$ is the maximum value among the N behavior value functions $Q(s_t,a_{1t}; \theta_t)$ to $Q(s_t,a_{Nt}; \theta_t)$, the learning portion 41b selects the behavior $a_{Nt}$.

If the behavior is selected, the learning portion 41b changes the parameters 44a corresponding to the behavior. For example, in the example illustrated in Fig. 11, in a case where the behavior a1 increasing the impedance parameter m about the x axis of the robot coordinate system by a predetermined value is selected, the learning portion 41b increases a value of the impedance parameter m about the x axis indicated by the force control parameter by the predetermined value. In a case where the parameters 44a are changed, the control unit 43 controls the robot 3 by referring to the parameters 44a, so as to perform a series of work. In the present embodiment, a series of work is performed whenever a behavior is selected, but some of the series of work may be performed whenever a behavior is selected (at least one of a plurality of steps forming a series of work may be performed) .

Next, the state observation portion 41a observes a state variable (step S225). In other words, the state observation portion 41a performs the same process as in the observation of a state variable in step S210, and acquires, as state variables, values of currents supplied to the motors M1 to M6, a position of the TCP specified on the basis of outputs from the encoders E1 to E6, and a position of the TCP specified on the basis of an output from the force sensor P. In a case where the current trial number is t (in a case where a selected behavior is $a_t$), the state s acquired in step S225 is a state $S_{t+1}$.

Next, the learning portion 41b evaluates a reward (step S230). In other words, the learning portion 41b acquires a required time from the start of work to the finish thereof on the basis of a clocking circuit (not illustrated), acquires a positive reward in a case where the required time for the work is shorter than a reference, and acquires a negative reward in a case where the required time for the work is longer than the reference. The learning portion 41b acquires a position of the gripper 23 in each step of the work, and acquires a vibration intensity on the basis of the position of the gripper 23 acquired in each step of the work. The learning portion 41b acquires a positive reward in a case where the extent of the vibration intensity is lower than a reference, and acquires a negative reward in a case where the extent thereof is higher than the reference. In a case where a series of work is formed of a plurality of steps, a sum of rewards in the steps may be acquired, and a statistical value (for example, an average value) may be acquired.

The learning portion 41b acquires an overshoot amount on the basis of a position of the gripper 23 acquired in an end period of each step of the work. The learning portion 41b acquires a positive reward in a case where the overshoot amount is smaller than a reference, and acquires a negative reward in a case where the overshoot amount is larger than a reference. In a case where such a series of work is formed of a plurality of steps, a sum of rewards in the steps may be acquired, and a statistical value (for example, an average value) may be acquired.

The learning portion 41b acquires information indicating sounds acquired by the sound collecting device during the work. The learning portion 41b acquires a positive reward in a case where the magnitude of sounds generated during the work is less than a reference, and acquires a negative reward in a case where the magnitude thereof is more than the reference. In a case where the current trial number is t, the reward r acquired in step S230 is a reward $r_{t+1}$.

The present embodiment is aimed to update the behavior value function Q shown in Expression (2), but, in order to appropriately update the behavior value function Q, the multilayer neural network indicating the behavior value function Q is required to be optimized ($\theta$ is required to be optimized). In order to appropriately output the behavior value function Q by using the multilayer neural network illustrated in Fig. 8, teacher data which is a target of the output is necessary. The multilayer neural network is expected to be optimized by improving the parameter $\theta$ such that an error between an output from the multilayer neural network and a target is minimized.

However, in the present embodiment, in a stage in which learning is not completed, there are no findings of the behavior value function Q, and it is hard to specify a target. Therefore, in the present embodiment, the parameter $\theta$ indicating the multilayer neural network is improved by using an objective function minimizing the second term of Expression (2), that is, a so-called TD error. In other words, $(r_{t+1}+\gamma max_{a'}Q(s_{t+1},a' ; \theta_t))$ is used as a target, and the parameter $\theta$ is learned such that an error between the target and $Q(s_t,a_t; \theta_t)$ is minimized. However, since the target $(r_{t+1}+\gamma max_{a'}Q(s_{t+1},a' ; \theta_t))$ includes the parameter $\theta$ as a learning target, in the present embodiment, a target is fixed (to, for example, the parameter $\theta$ learned last (an initial value of $\theta$ in first learning)) over some trials. In the present embodiment, the number of trials over which a target is fixed is predefined.

Since learning is performed on the premise, if the reward is evaluated in step S230, the learning portion 41b calculates an objective function (step S235) . In other words, the learning portion 41b calculates an objective function (for example, a function which is proportion to an expected value of the square of a TD error or a sum total of the squared TD errors) for evaluating a TD error in each trial. Since the TD error is calculated in a state in which a target is fixed, if the fixed target is expressed as $(r_{t+1}+\gamma max_{a'}Q(s_{t+1},a' ; \theta_-))$, the TD error is expressed as $(r_{t+1}+\gamma max_{a'}Q(s_{t+1},a' ; \theta_-))$ - $Q(s_t, a_t; \theta_t)$. In the equation of the TD error, the reward $r_{t+1}$ is a reward obtained in step S230 due to the behavior $a_t$.

$max_{a'}Q(s_{t+1},a' ; \theta_-)$ is the maximum value among outputs obtained in a case where the state $s_{t+1}$ calculated in step S225 due to the behavior $a_t$ is input to a multilayer neural network specified by the fixed parameter $\theta_-$. $Q(s_t,a_t; \theta_t)$ is a value of an output corresponding to the behavior $a_t$ among outputs obtained in a case where the state $s_t$ before the behavior $a_t$ is selected is input to a multilayer neural network specified by the parameter $\theta_t$ in the stage at the trial number t.

In a case where the objective function is calculated, the learning portion 41b determines whether or not learning is finished (step S240). In the present embodiment, a threshold value for determining whether or not a TD error is sufficiently small is predefined, and, in a case where the objective function is equal to or less than the threshold value, the learning portion 41b determines that learning is finished.

In a case where it is determined that learning is not finished in step S240, the learning portion 41b updates a behavior value (step S245). In other words, the learning portion 41b specifies a change in the parameter $\theta$ for reducing the objective function on the basis of a partial differential using the parameter $\theta$ of the TD error, and changes the parameter $\theta$. Of course, herein, the parameter $\theta$ may be changed according to various methods, and, for example, a method of gradient decent such as RMSProp may be employed. Adjustment using a learning ratio may be performed as appropriate. According to the above-described processes, the parameter θ can be changed such that the behavior value function Q comes close to a target.

However, in the present embodiment, since a target is fixed as described above, the learning portion 41b further determines whether or not the target is updated. Specifically, the learning portion 41b determines whether or not trials of a predefined number have been performed (step S250), and, in a case where it is determined that the trials of a predefined number have been performed in step S250, the learning portion 41b updates the target (step S255). In other words, the learning portion 41b updates the parameter θ referred to when calculating the target to the latest parameter θ. Thereafter, the learning portion 41b repeatedly performs the processes in step S215 and the subsequent steps. On the other hand, in a case where it is determined that the trials of a predefined number have not been performed in step S250, the learning portion 41b skips the step S255, and repeatedly performs the processes in step S215 and the subsequent steps.

In a case where it is determined that learning is finished in step S240, the learning portion 41b updates the learning information 44e (step S260). In other words, the learning portion 41b records the parameter θ obtained through learning in the learning information 44e as the parameter θ which is to be referred to during work performed by the robot 3. In a case where the learning information 44e including the parameter θ is recorded, the control unit 43 controls the robot 3 on the basis of the parameters 44a when the robot 3 performs work as in steps S110 to S130. Observation of the current state in the state observation portion 41a and selection of a behavior in the learning portion 41b are repeatedly performed in the process of the work. Of course, in this case, the learning portion 41b selects the behavior a giving the maximum value among the outputs Q(s,a) calculated with the state as an input. In a case where the behavior a is selected, the parameters 44a are updated to be values corresponding to a state in which the behavior a has been performed.

According to the above-described configuration, the control unit 43 can perform work while selecting the behavior a maximizing the behavior value function Q. The behavior value function Q is optimized as a result of repeatedly performing a plurality of trials through the above-described processes. The trials are automatically performed by the calculation unit 41, and thus it is possible to easily perform such a plurality of trials which cannot be artificially performed. Therefore, according to the present embodiment, it is possible to increase the quality of work performed by the robot 3 with a higher probability than in force control parameters which are artificially determined.

In the present embodiment, the impedance parameters as the parameters 44a are changed due to a behavior. Therefore, it is possible to automatically adjust the impedance parameters which are hard to appropriately set through artificial adjustment and are used to control the motors. In the present embodiment, the start point and the end point as the parameters 44a are changed due to a behavior. Therefore, it is possible to automatically adjust the start point and the end point which are hard to appropriately set through artificial adjustment.

In the present embodiment, the force control coordinate system as the parameter 44a is changed due to a behavior. As a result, a position of the offset point from the TCP of the robot 3 is changed. Therefore, it is possible to automatically adjust a position of the offset point from the TCP which is hard to appropriately set through artificial adjustment. In the present embodiment, the target force as the parameter 44a may be changed due to a behavior. Therefore, it is possible to automatically adjust the target force which is hard to appropriately set through artificial adjustment. Particularly, it is hard to artificially idealize a combination of the force control coordinate system and the target force, and thus a configuration of automatically adjusting such a combination is useful.

In the present embodiment, a reward for a behavior is evaluated on the basis of whether or not work performed by the robot 3 is good or bad, and thus a parameter can be optimized such that the work of the robot 3 is successful. In the present embodiment, since a reward is evaluated to be positive in a case where a required time for work is shorter than a reference, it is possible to easily calculate a force control parameter for causing the robot 3 to perform work in a short period of time.

In the present embodiment, since a reward is evaluated to be positive in a case where a vibration intensity is lower than a reference, it is possible to easily calculate a force control parameter causing a low probability that vibration may be generated due to an operation of the robot 3. In the present embodiment, since a reward is evaluated to be positive in a case where an overshoot amount of a position of the robot 3 is smaller than a reference, it is possible to easily calculate a force control parameter causing a low probability that the robot 3 may overshoot. In the present embodiment, since a reward is evaluated to be positive in a case where a level of generated sounds is lower than a reference, it is possible to easily calculate a force control parameter causing a low probability that abnormality may occur in the robot 3.

According to the present embodiment, since the behavior value function Q is automatically optimized, it is possible to easily calculate a force control parameter for performing high performance force control. Since the behavior value function Q is automatically optimized, it is also possible to automatically calculate an optimal force control parameter.

In the present embodiment, since position information of the robot 3 is acquired by using the force sensor P which is generally used for the robot 3, it is possible for the robot 3 to calculate position information on the basis of the generally used sensor.

In the present embodiment, the learning portion 41b actually measures an operation result of the robot 3 as a state variable, and optimizes a force control parameter. Therefore, it is possible to optimize a force control parameter in accordance with an actual environment in which the robot 3 performs work. Therefore, a force control parameter can be optimized so as to correspond to a use environment of the robot 3.

In the present embodiment, the state observation portion 41a observes a state variable in a state in which the gripper 23 as an end effector is attached to the robot 3. The learning portion 41b changes the parameters 44a corresponding to a behavior in a state in which the gripper 23 as an end effector is attached to the robot 3. According to this configuration, it is possible to easily calculate a force control parameter suitable for the robot 3 performing an operation using the gripper 23 as an end effector.

In the present embodiment, the state observation portion 41a observes a state variable in a state in which the gripper 23 as an end effector grips a target object. In the present embodiment, the learning portion 41b changes the parameters 44a corresponding to a behavior in a state in which the gripper 23 as an end effector grips a target object. According to this configuration, it is possible to easily calculate a force control parameter suitable for the robot 3 performing an operation by causing the gripper 23 as an end effector to grip a target object.

(5) Other embodiments

The above-described embodiment is one example for carrying out the invention, and various embodiments may be employed. For example, the control device may be built into a robot, and may be provided at a location which is different from an installation location of the robot, for example, an external server. The control device may be formed of a plurality of devices, and the control unit 43 and the calculation unit 41 may be formed of different devices. The control device may be a robot controller, a teaching pendant, a PC, a server connected to a network, or the like, and may include these devices. Some of the configurations of the above-described embodiment may be omitted, and the order of processes may be changed or some of the processes may be omitted. In the above-described embodiment, a target position or an initial vector of a target force is set in the TCP, but may be set in other positions, for example, the origin of the sensor coordinate system for the force sensor P or a screw tip.

Each of the robots may perform any work with a movable portion having any shape. The end effector is a part used for work related to a target object, and may be attached with any tool. The target object may be an object which is a work target in the robot, may be an object gripped with the end effector, and may be an object handled with a tool provided at the end effector, and various objects may be the target object.

A target force acting on the robot may be a target force acting on the robot when the robot is driven through force control, and, for example, in a case where a force (or a force calculated on the basis of a relevant force) detected by a force detection unit such as a force sensor is controlled to a specific force, the relevant force is the target force. Control may be performed such that a force (or a force calculated on the basis of a relevant force) detected by sensors other than the force sensor, for example, an acceleration sensor becomes the target force, and may be performed such that acceleration or angular velocity becomes a specific value.

In the learning process, a behavior value is updated through update of the parameter $\theta$ for each trial, and a target is fixed until trials of a predefined number are performed, but the parameter $\theta$ may be updated after a plurality of trials are performed. For example, there may be a configuration in which a target is fixed until trials of a first predefined number are performed, and the parameter $\theta$ is fixed until trials of a second predefined number (< the first predefined number) are performed. In this case, the parameter $\theta$ is updated on the basis of samples corresponding to the second predefined number after the trials of the second predefined number are performed, and the target is updated to the latest parameter $\theta$ in a case where the number of trials exceeds the first predefined number.

In the learning process, various well-known methods may be employed, and, for example, trial playback or clipping of a reward may be performed. In Fig. 8, the P (where P is an integer of one or more) layers DL are present, and a plurality of nodes are present in each layer, but a structure of each layer may employ various structures. For example, the number of layers or the number of nodes may be any number, various functions may be used as an activation function, and a network structure may be a convolution neural network structure. An input or output aspect is not limited to the example illustrated in Fig. 8, and may employ an example using at least a configuration in which the state s and the behavior a are input, and a configuration in which the behavior a maximizing the behavior value function Q is output as a one-hot vector.

In the above-described embodiment, the behavior value function is optimized while performing and trying a behavior according to a greedy measure on the basis of the behavior value function, and thus a greedy measure for the optimized behavior value function is regarded as an optimal measure. This process corresponds to a so-called value iteration method, but learning may be performed according to other methods, for example, a measurement iteration method. Various variables such as the state s, the behavior a, and the reward r may be variously normalized.

Various methods may be employed as a method of machine learning, and a trial may be performed according to ε-greedy measure based on the behavior value function Q. A method of the reinforcement learning is not limited to the above Q-learning, and a method such as SARSA may be employed. A method of separately generating a model of a measure and a model of a behavior value function, for example, an Actor-Critic algorithm may be used. If the Actor-Critic algorithm is used, there may be a configuration in which $\mu(s; \theta)$ which is an actor indicating a measure and $Q(s, a; \theta)$ which is a critic indicating a behavior value function are defined, a behavior is generated and tried according to a measure obtained by adding noise to $\mu(s; \theta)$, the actor and the critic are updated on the basis of a trial result, and thus the measure and the behavior value function are learned.

The calculation unit may calculate a learning target parameter by using machine learning, and the parameter may be at least one of an optical parameter, an image processing parameter, an operation parameter, and a force control parameter. The machine learning may be a process of learning a better parameter by using sample data, and each parameter may be learned according to not only the above-described reinforcement learning but also various methods such as supervised learning or clustering.

The optical system captures an image of a target object. In other words, the optical system has a configuration of an image with a region including the target object as a visual field. Constituent elements of the optical system preferably include the imaging unit or the illumination unit, and may include various constituent elements. As described above, the imaging unit or the illumination unit may be moved by the arm of the robot, may be moved by a two-dimensional movement mechanism, and may be stationary. Of course, the imaging unit or the illumination unit may be replaced. A bandwidth of light (detection light from the imaging unit or output light from the illumination unit) used for the optical system is not limited to a visible light bandwidth, and any electromagnetic wave such as infrared light, ultraviolet light, and X rays may be used.

The optical parameter may be a value causing a state of the optical system to be changed, and a numerical value or the like for directly and indirectly specifying a state of the optical system formed of an imaging unit or an illumination unit is the optical parameter. The optical parameter may be, for example, a value indicating a position or an angle of the imaging unit or the illumination unit, and may be a numerical value (an ID or a product number) indicating the type of imaging unit or illumination unit.

The detection unit detects a target object on the basis of an imaging result in the optical system using a calculated optical parameter. In other words, the detection unit operates the optical system by using the learned optical parameter such that the target object is imaged, and performs a process of detecting the target object on the basis of an imaging result.

The detection unit may detect a target object, may have a configuration of detecting a positional attitude of a target object as in the above-described embodiment, may also have a configuration of detecting the presence or absence of a target object, and may employ various configurations. A positional attitude of a target object may be defined by, for example, six parameters including positions on three axes and rotation angles about the three axes, and, of course, any number of parameters may not be taken into consideration as necessary. For example, in a case of a target object installed on a flat surface, a parameter regarding at least one position may be excluded from a detection target as being known. In a case of a target object installed on a flat surface in a fixed direction, a parameter regarding an attitude may be excluded from a detection target.

A target object may be an object which is imaged by the optical system and is a detection target, and may be various objects such as a workpiece which is a work target of the robot, a peripheral object of the workpiece, and a part of the robot. Various methods may be employed as a method of detecting a target object on the basis of an imaging result, and a target object may be detected by extracting a feature amount of an image. A target object may be detected on the basis of an operation (detection of a movable object such as a person) of the target object, and various methods may be employed.

The control unit controls the robot on the basis of a detection result of a target object. In other words, the control unit has a configuration of determining the control content of the robot according to the detection result of the target object. Therefore, control of the robot may be control for holding a target object as described above, and various types of control may be performed. For example, various types of control such as control of positioning the robot on the basis of a target object, or control of starting or finishing an operation of the robot on the basis of a target object, are expected.

An aspect of the robot may be various aspects, and the robot may be a vertical articulated robot as in the above-described embodiment, and may also be an orthogonal robot, a horizontal articulated robot, and a dual-arm robot. Robots of various aspects may be combined with each other. Of course, aspects of the number or axes, the number of arms, and the end effector may employ various aspects. For example, the imaging unit 21 or the illumination unit 22 may be attached to a flat surface located over the robot 3, and the imaging unit 21 or the illumination unit 22 may be movable on the flat surface.

The state observation portion may observe a result changed due to trial of a behavior, may observe a state with various sensors, and may have a configuration in which control of changing a certain state to another state is performed, and another state is regarded to be observed if a failure (for example, an error) in the control is not observed. Observation using the sensors includes not only detection of a position but also acquisition of an image using an imaging sensor.

The behaviors, the states, and the rewards in the above-described embodiment are only examples, and a configuration in which other behaviors, states, and rewards are included, or a configuration in which any behavior or state is omitted may be used. For example, there may be a configuration in which the type of imaging unit 21 or illumination unit 22 can be selected as a behavior, and the type thereof can be observed as a state, with respect to the robots 1 and 2 in which the imaging unit 21 or the illumination unit 22 is replaceable . A reward may be determined on the basis of a determination result in the contact determination portion 43c. In other words, there may be a configuration in which, in a case where the contact determination portion 43c determines that the robot comes into contact with an object not expected for work, a reward based on the previous behavior is set to be negative in the learning process in the learning portion 41b. According to this configuration, the parameters 44a can be optimized such that the robot does not come into contact with an unexpected object.

For example, in optimization of an optical parameter, there may be a configuration in which work (for example, the above-described pickup work) based on a detection result of a target object in the robots 1 to 3 is performed, and the learning portion 41b evaluates a reward for a behavior on the basis of whether the work performed by the robots 1 to 3 is good or bad by using the detection result of the target object. This configuration may be a configuration in which whether or not the work is successful (for example, whether or not pickup is successful) is used as a reward instead of detection of a target object or in addition to detection of the target object among the rewards illustrated in Fig. 7.

Whether or not work is successful may be determined on the basis of a determination result in step S120 in a step (a pickup state or the like) in which whether or not work is successful can be determined. In this case, a behavior or a state may include a behavior or a state regarding operations of the robots 1 to 3. In this configuration, an image obtained by the optical system including the imaging unit 21 and the illumination unit 22 imaging a target object which is a work target of the robots 1 to 3 is preferably used as a state. According to this configuration, an optical parameter can be optimized such that work of the robots is successful. An image as a state observed in order to learn an optical parameter, an operation parameter, and a force control parameter may be an image captured by the imaging unit 21, and may be an image obtained by performing image processing (for example, the above-described smoothing process or sharpening process) on an image captured by the imaging unit 21.

There may be a configuration in which two or more kinds of parameters such as an optical parameter, an operation parameter, and a force control parameter may be optimized instead of separately optimizing the parameters. For example, in the example illustrated in Fig. 7, in the configuration of including a behavior changing an operation parameter or a force control parameter, the operation parameter or the force control parameter can be optimized along with an optical parameter. In this case, the robots 1 to 3 are controlled on the basis of the optimized operation parameter or force control parameter. According to this configuration, it is possible to optimize a parameter for performing work accompanied by detection of a target object, and thus to perform learning increasing the detection accuracy of the target object.

An image processing parameter may be a value causing an image as an imaging result of a target object to be changed, and is not limited to the examples illustrated in Fig. 3, and may be added or omitted. For example, the image processing parameter may be numerical values (including a flag or the like indicating a processing order) for specifying an image processing algorithm to be executed, such as the presence or absence of image processing, the intensity of image processing, or an order of image processing. More specifically, image processing may include a binarization process, a straight line detection process, a circle detection process, a color detection process, and an OCR process.

The image processing may be a process obtained by combining a plurality of kinds of image processing with each other. For example, a process such as a "process of recognizing a letter in a circle" may be obtained by combining the circle detection process with the OCR process. In any case, a parameter indicating the presence or absence or the intensity of each type of image processing may be the image processing parameter. A change in such an image processing parameter may be used as a behavior.

An operation parameter is not limited to the parameters described in the embodiment. For example, a learning target operation parameter may include servo gains for performing control on the basis of inertial sensors of the robots 1 to 3. In other words, with respect to a configuration in which the motors M1 to M6 are controlled in a control loop based on outputs from the inertial sensors, there may be a configuration in which servo gains in the control loop are changed due to a behavior. For example, with respect to a configuration in which angular velocity of a specific part of each of the robots 1 to 3 is calculated on the basis of the encoders E1 to E6 attached to each of the robots 1 to 3, angular velocity of the specific part is detected by a gyro sensor which is a kind of inertial sensor, feedback control is performed by multiplying a gyro servo gain by a difference therebetween, there may be a configuration in which the gyro servo gain is changed due to a behavior. In this configuration, it is possible to perform control for suppressing a vibration component of angular velocity generated at the specific part of the robot. Of course, the inertial sensor is not limited to a gyro sensor, and there may be a configuration in which an acceleration gain is changed due to a behavior with respect to a configuration in which the same feedback control is performed on an acceleration sensor or the like. According to the configuration, it is possible to automatically adjust a servo gain which is hard to appropriately set through artificial adjustment and is used to perform control on the basis of an inertial sensor. The acceleration sensor is a sensor detecting acceleration generated by motion of the robot, and the above-described force sensor is a sensor detecting a force acting on the robot. Typically, the acceleration sensor and the force sensor are different sensors, but, in a case where one sensor can replace the other sensor, one sensor may function as the other sensor.

Of course, a force control parameter is not limited to the parameters described in the embodiment, and a learning target parameter may be selected as appropriate. For example, regarding a target force, there may be a configuration in which all components or some components of six axes cannot be selected as behaviors (that is, fixed). This configuration may be assumed to be a configuration in which, in work of inserting a target object gripped by the robot into a fixed target object (a narrow tube or the like) which is fixed, a target force has a component fixed with respect to a point where the fixed target object is located, but learning is performed such that the force control coordinate system is changed according to the insertion work of the robot.

There may be a configuration in which the learning portion 41b may evaluate a reward to be negative in at least one of a case where the robot 3 drops a gripped target object before work is completed, a case where a part of the target object which is a work target of the robot 3 is separated before the work is completed, a case where the robot 3 is damaged, and a case where the target object which is a work target of the robot 3 is damaged. According to the configuration in which a reward is evaluated to be negative in a case where the robot 3 drops a gripped target object before work is completed, it is possible to easily calculate an operation parameter or a force control parameter causing a high probability that work may be completed without dropping the target object.

According to the configuration in which a reward is evaluated to be negative in a case where a part of the target object which is a work target of the robot 3 is separated before the work is completed, it is possible to easily calculate an operation parameter or a force control parameter causing a high probability that work may be completed without separating the target object. According to the configuration in which a reward is evaluated to be negative in a case where the robot 3 is damaged, it is possible to easily calculate an operation parameter or a force control parameter causing a low probability that the robot 3 may be damaged.

According to the configuration in which a reward is evaluated to be negative in a case where the target object which is a work target of the robot 3 is damaged, it is possible to easily calculate an operation parameter or a force control parameter causing a low probability that the target object may be damaged. There may be a configuration in which whether or not the robot 3 drops a gripped target object before work is completed, whether or not a part of the target object which is a work target of the robot 3 is separated before the work is completed, whether or not the robot 3 is damaged, and whether or not the target object which is a work target of the robot 3 is damaged are detected by various sensors, for example, the imaging unit 21.

The learning portion 41b may evaluate a reward to be positive in a case where work performed by the robot 3 is normally completed. According to the configuration in which a reward is evaluated to be positive in a case where work performed by the robot 3 is normally completed, it is possible to easily calculate an operation parameter or a force control parameter causing work of the robot 3 to succeed.

A position detection unit detecting a position of the robot 3 is not limited to the encoder or the force sensor as in the embodiment, and may be other sensors such as an optical sensor, for example, a dedicated inertial sensor or the imaging unit 21, or a distance sensor. The sensor may be built into the robot, but may be disposed outside the robot. In a case of using a position detection unit disposed outside the robot, position information can be calculated without being influenced by an operation of the robot.

The calculation unit 41 may calculate an operation parameter or a force control parameter common to a plurality of operations on the basis of the plurality of different operations of the robot. The plurality of operations may include an operation performed by using an optimized operation parameter. Therefore, the plurality of operations may be, for example, a plurality of different kinds of work (pickup work, polishing work, screw fastening work, and the like) or may be the same kind of work (a plurality of types of work in which sizes of screws are different from each other) . According to the configuration, it is possible to easily calculate a general purpose operation parameter or force control parameter which is applicable to various operations.

**Claims**

1.   A control device comprising:

a calculation unit that calculates an optical parameter related to an optical system imaging a target object, by using machine learning;
a detection unit that detects the target object on the basis of an imaging result in the optical system by using the calculated optical parameter; and
a control unit that controls a robot on the basis of a detection result of the target object.

**2.** The control device according to claim 1,
wherein the detection unit detects a positional attitude of the target object.

**3.** The control device according to claim 1 or 2,
wherein the optical system includes an imaging unit, and
wherein the optical parameter includes an imaging unit parameter related to the imaging unit.

**4.** The control device according to claim 3,
wherein the optical parameter includes an image processing parameter related to image processing on an image
of the target object captured by the imaging unit.

**5.** The control device according to any one of the preceding claims,
wherein the optical system includes an illumination unit, and
wherein the optical parameter includes an illumination unit parameter related to the illumination unit.

**6.** The control device according to any one of the preceding claims,
wherein the calculation unit includes
a state observation portion that observes at least an image captured by using the optical system at the optical
parameter as a state variable; and
a learning portion that learns the optical parameter on the basis of the image as the state variable.

**7.** The control device according to claim 6,
wherein the learning portion determines a behavior changing the optical parameter on the basis of the image as the
state variable, and optimizes the optical parameter.

**8.** The control device according to claim 7,
wherein the learning portion evaluates a reward for the behavior on the basis of whether or not a detection result
of the target object is good or bad.

**9.** The control device according to claim 7 or 8,
wherein the learning portion evaluates a reward for the behavior on the basis of whether or not work performed by
the robot is good or bad by using a detection result of the target object.

**10.** The control device according to any one of claims 7 to 9,
wherein the calculation unit optimizes the optical parameter by repeatedly performing observation of the state
variable, determination of the behavior corresponding to the state variable, and evaluation of the reward obtained
through the behavior.

**11.** The control device according to any one of the preceding claims,
wherein the calculation unit calculates an operation parameter related to an operation of the robot, and
wherein the control unit controls the robot on the basis of the operation parameter.

**12.** The control device according to claim 11,
wherein the calculation unit calculates the optical parameter and the operation parameter on the basis of an image
obtained by the optical system imaging the target object which is a work target of the robot.

**13.** A robot controlled by the control device according to any one of the preceding claims.

**14.** A robot system comprising:

the control device according to any one of the preceding claims; and
a robot controlled by the control device; and
the optical system imaging the target object which is a work target of the robot.

ROBOT COORDINATE SYSTEM

FIG. 1

FIG. 2

PARAMETERS 44a

OPTICAL
PARAMETERS

IMAGING UNIT
PARAMETERS

ILLUMINATION UNIT
PARAMETERS

IMAGE PROCESSING
PARAMETERS

POSITION OF
IMAGING UNIT

EXPOSURE TIME OF
IMAGING UNIT

APERTURE OF
IMAGING UNIT

POSITION OF
ILLUMINATION UNIT

BRIGHTNESS IN
ILLUMINATION UNIT

INTENSITY OF
SMOOTHING PROCESS

INTENSITY OF
SHARPENING PROCESS

THRESHOLD VALUE IN
TEMPLATE MATCHING

IMAGE PROCESSING
SEQUENCE

OPERATION
PARAMETERS

START POINT

END POINT

ACCELERATION AND DECELERATION
CHARACTERISTICS

SERVO GAIN

FORCE CONTROL
PARAMETERS

START POINT

END POINT

ACCELERATION AND DECELERATION
CHARACTERISTICS

SERVO GAIN

FORCE CONTROL
COORDINATE SYSTEM

TARGET FORCE

IMPEDANCE PARAMETERS

FIG. 3

FIG. 4

FIG. 5

FIG. 6

| | |
|---|---|
| x COORDINATE OF IMAGING UNIT | INCREASE : a1 |
| | DECREASE : a2 |
| y COORDINATE OF IMAGING UNIT | INCREASE : a3 |
| | DECREASE : a4 |
| x COORDINATE OF ILLUMINATION UNIT | INCREASE : a5 |
| | DECREASE : a6 |
| y COORDINATE OF ILLUMINATION UNIT | INCREASE : a7 |
| | DECREASE : a8 |
| BRIGHTNESS IN ILLUMINATION UNIT | INCREASE : a9 |
| | DECREASE : a10 |
| INTENSITY OF SMOOTHING PROCESS | INCREASE : a11 |
| | DECREASE : a12 |
| INTENSITY OF SHARPENING PROCESS | INCREASE : a13 |
| | DECREASE : a14 |
| THRESHOLD VALUE IN TEMPLATE MATCHING | INCREASE : a15 |
| | DECREASE : a16 |

$Q(s, a)$

AGENT — BEHAVIOR a → ENVIRONMENT

REWARD r

STATE s'

WHETHER OR NOT DETECTION IS SUCCESSFUL

| |
|---|
| x COORDINATE OF IMAGING UNIT |
| y COORDINATE OF IMAGING UNIT |
| x COORDINATE OF ILLUMINATION UNIT |
| y COORDINATE OF ILLUMINATION UNIT |
| BRIGHTNESS IN ILLUMINATION UNIT |
| INTENSITY OF SMOOTHING PROCESS |
| INTENSITY OF SHARPENING PROCESS |
| THRESHOLD VALUE IN TEMPLATE MATCHING |
| CAPTURED IMAGE |

FIG. 7

FIG. 8

FIG. 9

42

| 6 AXES | SERVO GAIN Kpp | INCREASE : a1 - a6 |
| --- | --- | --- |
| | | DECREASE : a7 - a12 |
| | SERVO GAIN Kpi | INCREASE : a13 - a18 |
| | | DECREASE : a19 - a24 |
| | SERVO GAIN Kpd | INCREASE : a25 - a30 |
| | | DECREASE : a31 - a36 |
| | SERVO GAIN Kvp | INCREASE : a37 - a42 |
| | | DECREASE : a43 - a48 |
| | SERVO GAIN Kvi | INCREASE : a49 - a54 |
| | | DECREASE : a55 - a60 |
| | SERVO GAIN Kvd | INCREASE : a61 - a66 |
| | | DECREASE : a67 - a72 |
| | ACCELERATION AND DECELERATION CHARACTERISTICS : ACCELERATION RANGE | INCREASE : a73 - a78 |
| | | DECREASE : a79 - a84 |
| | ACCELERATION AND DECELERATION CHARACTERISTICS : DECELERATION RANGE | INCREASE : a85 - a90 |
| | | DECREASE : a91 - a96 |
| | ACCELERATION AND DECELERATION CHARACTERISTICS : PERIOD | INCREASE : a97 - a102 |
| | | DECREASE : a103 - a108 |

Q(s, a)

AGENT —— BEHAVIOR a ——→ ENVIRONMENT

—— REWARD r ——

STATE s

| CURRENTS OF M1 TO M6 |
| --- |
| VALUES OF E1 TO E6 |
| OUTPUT FROM FORCE SENSOR |

| REQUIRED TIME |
| --- |
| DIVERGENCE FROM TARGET POSITION |
| VIBRATION INTENSITY |
| OVERSHOOT AMOUNT |
| ABNORMAL NOISE INTENSITY |

FIG.10

| | | | |
|---|---|---|---|
| 6 AXES | IMPEDANCE PARAMETER : m | | INCREASE : a1 - a6 |
| | | | DECREASE : a7 - a12 |
| | IMPEDANCE PARAMETER : d | | INCREASE : a13 - a18 |
| | | | DECREASE : a19 - a24 |
| | IMPEDANCE PARAMETER : k | | INCREASE : a25 - a30 |
| | | | DECREASE : a31 - a36 |
| FORCE CONTROL COORDINATE SYSTEM | 3 AXES | ORIGIN COORDINATE | INCREASE : a37 - a39 |
| | | | DECREASE : a40 - a42 |
| | | ROTATION ANGLE | INCREASE : a43 - a45 |
| | | | DECREASE : a46 - a48 |
| TARGET FORCE | | ACTING POINT COORDINATE | INCREASE : a49 - a51 |
| | | | INCREASE : a52 - a54 |
| | 6 AXES | MAGNITUDE | DECREASE : a55 - a60 |
| | | | DECREASE : a61 - a66 |
| 3 AXES | START POINT | | INCREASE : a67 - a69 |
| | | | DECREASE : a70 - a72 |
| | END POINT | | INCREASE : a73 - a75 |
| | | | DECREASE : a76 - a78 |

Q(s, a)

AGENT — BEHAVIOR a → ENVIRONMENT

REWARD r

STATE s

| CURRENTS OF M1 TO M6 |
|---|
| VALUES OF E1 TO E6 |
| OUTPUT FROM FORCE SENSOR |

| INCREASE AND DECREASE IN REQUIRED TIME |
|---|
| VIBRATION INTENSITY |
| OVERSHOOT AMOUNT |
| ABNORMAL NOISE INTENSITY |

## FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5969676 B